# EUROPEAN PATENT APPLICATION

(11) **EP 2 023 351 A1**
(43) Date of publication of application: **11.02.2009**
(21) Application number: 07743418.1
(22) Date of filing: 15.05.2007
(51) Int. Cl.: G21F 5/012, G21C 19/32, G21F 9/36

(54) **BASKET FOR CONTAINING RECYCLED FUEL ASSEMBLY AND CONTAINER FOR CONTAINING RECYCLED FUEL ASSEMBLY**

(30) Priority: 15.05.2006 JP 2006135508
(71) Applicant: Mitsubishi Heavy Industries, Ltd., Tokyo 108-8215 (JP)
(72) Inventor: TAMAKI, Hiroki, Hyogo-ken 652-8585 (JP); KISHIMOTO, Junichi, Hyogo-ken 652-8585 (JP); KAWAHARA, Yoshiyuki, Hyogo-ken 652-8585 (JP); SAITO, Yuichi, Hyogo-ken 652-8585 (JP); OOKAME, Shinji, Hyogo-ken 652-0865 (JP)
(74) Representative: HOFFMANN EITLE
(86) International application number: PCT/JP2007/059983
(87) International publication number: WO 2007/132863

(57) **Abstract**

It is an object of the present invention to suppress, while securing heat transfer performance and a subcritical function, a fall in manufacturing efficiency when a material hard to be extruded such as a B-A1 material is used. To attain the object, a recycled fuel assembly storage basket 1 according to the present invention is configured by combining first square pipes 10 and hollow tabular members 20. Storage cell rows are formed by linearly arraying a plurality of rows of the first square pipes 10 with projections 10t₁ thereof set in contact with each other and projections 10t₂ thereof set in contact with each other. The tabular members 20 are stacked in a plurality of stages between storage cells, in which the first square pipes 10 are linearly arrayed, with long side ends TL of the tabular members 20 set in contact with each other.

## Description

### TECHNICAL FIELD

The present invention relates to a recycled fuel assembly storage basket and a recycled fuel assembly storage container that store recycled fuel assemblies.

### BACKGROUND ART

Nuclear fuel assemblies used in a nuclear power plant and the like, i.e., used nuclear fuel assemblies extracted from a nuclear reactor after being loaded in the nuclear reactor and burned, are referred to as recycled fuel assemblies. The recycled fuel assemblies contain highly radioactive substances such as a fission product (FP). Therefore, usually, the recycled fuel assemblies are cooled for a predetermined period in a cooling pit of the nuclear power plant. Thereafter, the recycled fuel assemblies are stored in a recycled fuel assembly storage container having a radiation shielding function, i.e., a cask used for transportation and storage. The recycled fuel assemblies are transported to a reprocessing plant or an intermediate storage facility by a vehicle or a ship and stored until being reprocessed.

When the recycled fuel assemblies are stored in the cask, a basket called a recycled fuel assembly storage basket that is formed by collecting basket cells having a square pipe-like section as storage spaces is used. The recycled fuel assemblies are respectively inserted in plural storage spaces formed in this recycled fuel assembly storage basket. Consequently, the recycled fuel assemblies during transportation are kept away from one another at appropriate intervals and prevented from reaching a critical point. Further, appropriate holding power against vibration during transportation, assumed events, and the like is secured. As conventional examples of such a basket, various kinds of baskets are disclosed in, for example, Patent Documents 1 to 4.

Patent Document 1: Japanese Patent Application Laid-open No. H09-159796
Patent Document 2: Japanese Patent Application Laid-open No. 2001-133590
Patent Document 3: Japanese Patent Application Laid-open No. 2001-201595
Patent Document 4: Japanese Patent Application Laid-open No. 2003-207593

### DISCLOSURE OF INVENTION

### PROBLEM TO BE SOLVED BY THE INVENTION

When the recycled fuel assemblies are transported and stored, the recycled fuel assemblies are stored in the basket to be close to each other. Therefore, a neutron absorber is used for the recycled fuel assembly storage basket for the purpose of imparting neutron absorbing power with some means to prevent the recycled fuel assemblies stored therein from reaching a critical point. As substances having the neutron absorbing power, gadolinium (Dd), samarium (Sm), cadmium (Cd), and the like are known. In general, a function of absorbing neutrons (hereinafter referred to as neutron absorbing power) is obtained by using a boron aluminum alloy or boron stainless steel containing boron or a boron compound as a basket structure material, coating the surface of the basket structure material, sticking a relevant plate material to the surface of the basket structure material or integrating the plate material with the surface with binding means, or providing a sandwich structure holding the basket structure material. A function of preventing criticality (a subcritical function) and heat removing function matching a state of fuel of the loaded recycled fuel assemblies are required. A material and the structure of the basket, an array of the basket cells, and the like are required.

A process for loading the recycled fuel assemblies in the cask is usually performed in a pool for fuel assemblies set in a nuclear power plant or the like (in water). Fuel used in a PWR (Pressurized Water Reactor) has a high degree of burn-up and is highly likely to reach a critical point during loading of the recycled fuel assemblies. Therefore, a presence ratio of ¹⁰B having the neutron absorbing power needs to be set high in a basket. The criticality is prevented by increasing the plate thickness of the basket cells, increasing the content (percentage of mass) of ¹⁰B, or providing flux traps. Further, because heating value is also large, the basket is required to have satisfactory heat transfer performance. The technology disclosed in Patent Document 1 targets fuel used in a so-called BWR (Boiling Water Reactor). The recycled fuel assemblies having a high degree of burn-up are assumed in a basket for storing the BWR fuel as well. It is surmised that the basket has the structure similar to the basket for the PWR fuel. Because the PWR fuel is bulkier and heavier than the BWR fuel, a basket structure more excellent in the subcritical function and heat transfer performance and having high rigidity is required for the PWR fuel.

To achieve the subcritical function and the heat transfer performance, in recent years, the basket is often make of a B (boron)-Al (aluminum) material. In this case, as an example of a structure obtained by combining tabular boron-aluminum materials in a lattice shape, for example, Japanese Patent Application Laid-open No. 2001-201595 is known. As examples of a structure obtained by combining hollow materials formed by extruding, Japanese Patent Application Laid-open No. 2001-133590 and Japanese Patent Application Laid-open No. H09-159796 are known. There is also a basket made of boron stainless steel that can transfer, with a large temperature difference, heat to a container making use of high heat resistance. In the case of the basket made of boron stainless steel, the temperature of fuel stored therein is kept high. Soundness of the fuel itself needs to be sufficiently taken into account.

For example, in the structure obtained by combining square pipes disclosed in Japanese Patent Application Laid-open No. 2001-133590, a heat transfer area cannot be sufficiently secured in the square pipes arrayed in a zigzag, which is disadvantageous as heat transfer performance. In a basket in which basket cells of a square pipe type are squarely arrayed, a load can be substantially equally received when a horizontal falling accident of a cask occurs, which is advantageous in terms of the structure. However, in the basket in which the square pipes are arrayed in a zigzag, a load is received on sides of the cells depending on a falling posture of the cask and a concentrated load may be generated, which is disadvantageous for securing structural strength. Therefore, there is a demand for a basket structure that can secure, amid restrictions in terms of weight and dimensions, heat transfer performance for removing decay heat of the recycled fuel assemblies and structural strength for securing subcritical performance even in an event such as a falling accident.

Therefore, the present invention has been devised in view of the above description and it is an object of the present invention to provide a recycled fuel assembly storage basket and a recycled fuel assembly storage container that can attain at least one of transferring decay heat of recycled fuel assemblies to a basket and effectively removing the decay heat to the outside from the basket, securing subcritical performance, improving structural strength and heat transfer properties by combining square pipes, and reducing manufacturing man-hour.

### MEANS FOR SOLVING PROBLEM

To solve above problems and achieve objects, according to the present invention, a recycled fuel assembly storage basket comprising: square pipes, on at least one surfaces on outer sides of opposed sidewalls of which a plurality of projections are provided, the square pipes storing recycled fuel assemblies; and tabular members. A plurality of storage cell rows formed by arraying the projections of the square pipes in contact with each other are provided, and the tabular members are stacked in a plurality of stages among the storage cell rows with long side ends thereof set in contact with each other.

In this recycled fuel assembly storage basket, a plurality of storage cell rows formed by arraying a plurality of projections, which are provided at least on one surfaces on outer sides of sidewalls of square pipes, in contact with each other are provided. Solid or hollow tabular members are stacked in a plurality of stages among the storage cell rows with long side ends thereof set in contact with each other. This makes it possible to increase a heat transfer area between the square pipes and the tabular members and secure sufficient heat transfer performance and a sufficient subcritical function. The tabular members can disperse a load when a horizontal falling accident occurs and prevent a concentrated load on basket cells located below the tabular members from being generated. Therefore, it is possible to reduce the structural strength required for the basket cells. The hollow tabular members can form flux traps among the square pipes that store the recycled fuel assemblies. Therefore, it is possible secure the subcritical function even for a PWR fuel.

According to the next invention, a recycled fuel assembly storage basket comprising: first square pipes, on outer sides of opposed sidewalls of which a plurality of projections are provided, respectively, the first square pipes storing recycled fuel assemblies; second square pipes, on outer sides of one side walls of which a plurality of projections are provided, the second square pipes storing recycled fuel assemblies; and tabular members. A plurality of storage cell rows formed by arraying the projections of the first square pipes in contact with each other and arranging the second square pipes on the outer sides are provided, the projections of the first square pipes and the projections of the second square pipes being in contact with each other, and the tabular members are stacked in a plurality of stages among the storage cell rows with long side ends thereof set in contact with each other.

In this recycled fuel assembly storage basket, a plurality of storage cell rows formed by arraying a plurality of projections, which are provided on outer sides of sidewalls of first square pipes, in contact with each other and arranging second square pipes on the outer sides are provided. Solid or hollow tabular members are stacked in a plurality of stages among the storage cell rows with long side ends thereof set in contact with each other. This makes it possible to increase a heat transfer area between the first and second square pipes and the tabular members and form flux straps among the square pipes that store the recycled fuel assemblies. Therefore, it is possible to secure sufficient heat transfer performance and a sufficient subcritical function. Because the number of projections provided in the square pipes is small, it is possible to secure accuracy of molding even when a material hard to be extruded or a material hard to be rolled such as a boron-aluminum material or boron stainless steel is used. Therefore, it is possible to prevent a fall in manufacturing efficiency. The square pipes and the hollow tabular members can be bent or bonded. However, when hot extrusion molding is possible, it is reasonable to manufacture the square pipes and the hollow tabular members with extrusion molding.

According to the recycled fuel assembly storage basket of the following present invention, in the recycled fuel assembly storage basket, the tabular members are stacked in a longitudinal direction of the square pipes.

According to the recycled fuel assembly storage basket of the following present invention, in the recycled fuel assembly storage basket, a reinforcing member that supports a part of a load on the recycled fuel assembly storage basket and reinforces the recycled fuel assembly storage basket is arranged between the tabular members adjacent to each other. Consequently, the reinforcing member can bear a part of a shock load. Therefore, it is possible to secure the strength of the recycled fuel assembly storage basket without unreasonably increasing the thickness of the tabular members and secure high shock resistance and safety.

According to the recycled fuel assembly storage basket of the following present invention, in the recycled fuel assembly storage basket, the tabular members are hollow members having at least one hole.

According to the recycled fuel assembly storage basket of the following present invention, in the recycled fuel assembly storage basket, a solid or hollow intra-tabular member reinforcing member that supports a part of the load on the recycled fuel assembly storage basket and reinforces the recycled fuel assembly storage basket is arranged in the hole. Consequently, the reinforcing member can bear a part of a shock load. Therefore, it is possible to secure the strength of the recycled fuel assembly storage basket without unreasonably increasing the thickness of the tabular members and secure high shock resistance and safety.

According to the recycled fuel assembly storage basket of the following present invention, in the recycled fuel assembly storage basket, when there are two or more holes, the intra-tabular member reinforcing member is arranged in at least one of the holes.

According to the recycled fuel assembly storage basket of the following present invention, in the recycled fuel assembly storage basket, tapered sections are provided in portions of the projections that are in contact with the projections of the square pipe adjacent thereto.

With such a configuration, it is possible to suppress a shift of the square pipes when the square pipes are combined and further improve heat transfer performance and shock resistance performance. It is easy to assemble the recycled fuel assembly storage basket.

According to the recycled fuel assembly storage basket of the following present invention, in the recycled fuel assembly storage basket, size of a space surrounded by the projections is different depending of places where the square pipes are arranged. This makes it possible to configure the recycled fuel assembly storage basket according to a degree of burn-up of recycled fuel assemblies stored therein.

According to the recycled fuel assembly storage basket of the following present invention, in the recycled fuel assembly storage basket, the size of the space surrounded by the projections of the square pipes and the thickness of the tabular members are increased from an outer side to a center of the recycled fuel assembly storage basket. On the outer side of the recycled fuel assembly storage basket, radiation from recycled fuel is smaller than that in the center. Therefore, it is possible to set a dimension of flux straps on the outer side of the recycled fuel assembly storage basket smaller than that in the center and suppress an increase in mass and an increase in dimensions of the recycled fuel assembly storage basket.

According to the recycled fuel assembly storage basket of the following present invention, in the recycled fuel assembly storage basket, thickness of the tabular members is changed depending on places where the tabular members are arranged.

This makes it possible to configure the recycled fuel assembly storage basket according to a degree of burn-up of recycled fuel assemblies stored therein.

According to the recycled fuel assembly storage basket of the following present invention, in the recycled fuel assembly storage basket, size of a space surrounded by the projections of the square pipes and thickness of the tabular members are changed.
This makes it possible to vary pitches of square pipes forming the housing cells. Therefore, it is possible to configure the recycled fuel assembly storage basket according to a degree of burn-up of recycled fuel assemblies stored therein.

According to the recycled fuel assembly storage basket of the following present invention, a recycled fuel assembly storage basket, comprising: square pipes that store recycled fuel assemblies; hollow first tabular members rectangular in a sectional external shape; and hollow second tabular members rectangular in a sectional external shape. A plurality of storage cell rows alternately arrayed in contact with outer sides of sidewalls of square pipes and outer sides of sidewalls of first tabular members, and the second tabular members are stacked in a plurality of stages among the storage cell rows with long side ends thereof set in contact with each other.

In this recycled fuel assembly storage basket, a plurality of storage cell rows are alternately arrayed in contact with outer sides of sidewalls of square pipes and outer sides of sidewalls of first tabular members. Second tabular members are stacked in a plurality of stages among the storage cell rows with long side ends thereof set in contact with each other. This makes it possible to increase a heat transfer area between the square pipes and the tabular members and form flux traps among the square pipes that store the recycled fuel assemblies. Therefore, it is possible to secure sufficient heat transfer performance and a sufficient subcritical function. Because the square pipes do not have projections, even when a material hard to be extruded such as a boron-aluminum material or a material hard to be rolled such as boron stainless steel is used, it is possible to secure accuracy of molding and suppress a fall in manufacturing efficiency. A section of the first tabular members and a section of the second tabular members can have an identical shape and identical dimensions or may have different shapes and different dimensions.

According to the recycled fuel assembly storage basket of the following present invention, in the recycled fuel assembly storage basket, thickness or dimensions of the second tabular members are different from thickness or dimensions of the first tabular members, and the second tabular members are similar to the first tabular members.

According to the recycled fuel assembly storage basket of the following present invention, in the recycled fuel assembly storage basket, in at least a pair of the storage cell rows, corners of the square pipes in one of the storage cell rows are arranged in positions of sidewalls the square pipes in the other storage cell row.

With such a configuration, it is possible to arrange a larger number of square pipes in a limited section (a section orthogonal to an axis of the basket). Therefore, it is possible to increase the number of stored recycled fuel assemblies while suppressing an increase in dimensions of the recycled fuel assembly storage container.

According to the recycled fuel assembly storage basket of the following present invention, in the recycled fuel assembly storage basket, in at least a pair of the storage cell rows, corners of the square pipes in one of the storage cell rows are arranged in positions of corners the square pipes in the other storage cell row.

According to the recycled fuel assembly storage basket of the following present invention, in the recycled fuel assembly storage basket, cutouts are provided at least at the long side ends of the tabular member opposed to a bottom of a recycled fuel assembly storage container that houses the recycled fuel assembly storage basket therein or at ends of the square pipe opposed to the bottom of the recycled fuel assembly storage container. This improves drainage from the recycled fuel assembly storage basket.

According to the recycled fuel assembly storage basket of the following present invention, in the recycled fuel assembly storage basket, the tabular members arranged among the storage cell rows are stacked to have a gradient with respect to a bottom of a recycled fuel assembly storage container that houses the recycled fuel assembly storage basket therein.

This makes it possible to prevent the air and water from being accumulated in the hollow tabular members. As the gradient is steeper, a surer effect can be expected. However, because of easiness of manufacturing of a first tabular member that determines the gradient, it is reasonable to set the gradient to be equal to or larger than 0 degree and equal to or smaller than the height of one stage of the tabular members.

According to the recycled fuel assembly storage basket of the following present invention, in the recycled fuel assembly storage basket, a sectional shape of holes included in the tabular members is a race-track shape.

This makes it possible to eliminate planes in ceilings and bottoms of the holes of the tabular members. Therefore, it is possible to more effectively prevent the air and water from being accumulated in the hollow tabular members.

According to the recycled fuel assembly storage basket of the following present invention, in the recycled fuel assembly storage basket, an area of a portion of the long side end of the tabular member that is in contact with the long side end of the tabular member adjacent thereto is smaller than an area of a section of the tabular member when the tabular member is cut by a plane parallel to a surface forming the long side end of the tabular member. This makes it possible to reduce an area of a portion where the tabular members are in contact with each other. Therefore, it is possible to reduce moisture remaining in the recycled fuel assembly storage basket and reduce time required for vacuum drying.

According to the recycled fuel assembly storage basket of the following present invention, in the recycled fuel assembly storage basket, projections are formed in a portion of the long side end of the tabular member that is in contact with the long side end of the tabular member adjacent thereto. This makes it possible to reduce an area of a portion where the tabular members are in contact with each other. Therefore, it is possible to reduce moisture remaining in the recycled fuel assembly storage basket and reduce time required for vacuum drying.

According to the recycled fuel assembly storage basket of the following present invention, in the recycled fuel assembly storage basket, spaces are formed in a portion of the long side end of the tabular member that is in contact with the long side end of the tabular member adjacent thereto. This space facilitates exhaust. Therefore, it is possible to reduce time required for vacuum drying.

According to the recycled fuel assembly storage basket of the following present invention, in the recycled fuel assembly storage basket, a bottom plate that separates the recycled fuel assembly storage basket and the recycled fuel assembly storage container is provided between the recycled fuel assembly storage basket and the bottom of the recycled fuel assembly storage container. With such a configuration, it is possible to reduce a quantity of heat transmitted from the recycled fuel assembly storage basket to the bottom of the cask. Therefore, it is possible to suppress thermal deterioration of a material having neutron absorbing function (a neutron shielding material) arranged on the bottom side of the cask and cause the material to display neutron shielding performance throughout a storage period of several tens years.

According to the recycled fuel assembly storage basket of the following present invention, in the recycled fuel assembly storage basket, an opening is provided in the bottom plate.

According to the recycled fuel assembly storage basket of the following present invention, in the recycled fuel assembly storage basket, a space is provided between the bottom plate and the bottom of the recycled fuel assembly storage container. This opening makes it possible to improve drainage. Therefore, efficiency of vacuum drying is improved.

According to the recycled fuel assembly storage basket of the following present invention, in the recycled fuel assembly storage basket, at least the square pipes are made of an aluminum alloy containing boron or a boron compound.

According to the recycled fuel assembly storage basket of the following present invention, in the recycled fuel assembly storage basket, at least the tabular members are made of an aluminum alloy containing boron or a boron compound.

According to the recycled fuel assembly storage basket of the following present invention, in the recycled fuel assembly storage basket, at least the square pipes are made of a stainless steel containing boron or a boron compound.

According to the recycled fuel assembly storage basket of the following present invention, in the recycled fuel assembly storage basket, at least the tabular members are made of a stainless steel containing boron or a boron compound.

According to the recycled fuel assembly storage basket of the following present invention, in the recycled fuel assembly storage basket, at least the square pipes are made of a stainless steel containing gadolinium or a gadolinium compound.

According to the recycled fuel assembly storage basket of the following present invention, in the recycled fuel assembly storage basket, at least the tabular members are made of a stainless steel containing gadolinium or a gadolinium compound.

According to the recycled fuel assembly storage basket of the following present invention, the reinforcing member is stainless steel.

According to the recycled fuel assembly storage basket of the following present invention, the intra-tabular member reinforcing member is a material having strength higher than that of the tabular members.

According to the recycled fuel assembly storage basket of the following present invention, the reinforcing member is a material having strength higher than that of the tabular members.

According to the recycled fuel assembly storage basket of the following present invention, the reinforcing member can be configured by a material having strength higher than that of the tabular members.

According to the recycled fuel assembly storage container of the following present invention, a recycled fuel assembly storage container, comprising: a barrel including an opening and a cavity; a lid that is attached to the opening and seals the cavity; and the recycled fuel assembly storage basket arranged in the cavity.

This recycled fuel assembly storage container includes the recycled fuel assembly storage basket. Therefore, it is possible to suppress, while securing heat transfer performance and a subcritical function, a fall in manufacturing efficiency of molding even when a material hard to be extruded such as a boron-aluminum material or a material hard to be rolled such as boron stainless steel is used.

According to the recycled fuel assembly storage container of the following present invention, in the recycled fuel assembly storage container, an outer circumferential surface of the recycled fuel assembly storage basket is in contact with an inner wall of the cavity.

This recycled fuel assembly storage container includes the recycled fuel assembly storage basket. Therefore, because exchange of heat with the container is performed on a wide surface, it is possible to transfer heat with a small temperature difference while securing a subcritical function. This makes it possible to keep the temperature of stored recycled fuel assemblies low even when a B-SUS material inferior in heat transfer properties compared with a B-Al material is used and keep the temperature of the stored recycled fuel assembles lower in the case of the B-Al material.

### EFFECT OF THE INVENTION

The recycled fuel assembly storage basket and the recycled fuel assembly storage container according to the present invention can attain at least one of transferring decay heat of recycled fuel assemblies to a basket and effectively removing the decay heat to the outside from the basket, securing subcritical performance, improving structural strength and heat transfer properties by combining square pipes, and reducing manufacturing man-hour.

### BRIEF DESCRIPTION OF DRAWINGS

[Fig. 1] Fig. 1 is a sectional view of an overview of a cask as an example of a recycled fuel assembly storage container.
[Fig. 2] Fig. 2 is a sectional view taken along A-A of the cask shown in Fig. 1.
[Fig. 3] Fig. 3 is a plan view of a basket according to a first embodiment.
[Fig. 4] Fig. 4 is a sectional view taken along A-A shown in Fig. 3.
[Fig. 5] Fig. 5 is a perspective view of the basket according to the first embodiment.
[Fig. 6A] Fig. 6A is a partially enlarged view of the basket according to the first embodiment.
[Fig. 6B] Fig. 6B is a partially enlarged sectional view of the basket according to the first embodiment.
[Fig. 7A] Fig. 7A is a diagram for explaining a square pipe forming the basket according to the first embodiment.
[Fig. 7B] Fig. 7B is a diagram for explaining a square pipe forming the basket according to the first embodiment.
[Fig. 8] Fig. 8 is a diagram for explaining a tabular member forming the basket according to the first embodiment.
[Fig. 9A] Fig. 9A is a diagram for explaining a tabular member according to a first modification of the embodiment.
[Fig. 9B] Fig. 9B is a diagram for explaining a square pipe according to the first modification of the embodiment.
[Fig. 10A] Fig. 10A is a diagram for explaining tabular members forming a basket according to a second modification of the embodiment.
[Fig. 10B] Fig. 10B is an enlarged view of a portion where long side ends of the tabular members shown in Fig. 10A are in contact with each other.
[Fig. 10C] Fig. 10C is a diagram for explaining the tabular member shown in Fig. 10B.
[Fig. 10D] Fig. 10D is a diagram for explaining another example of the tabular members forming the basket according to the second modification of the embodiment.
[Fig. 11A] Fig. 11A is a diagram for explaining tabular members forming a basket according to a third modification of the embodiment.
[Fig. 11B] Fig. 11B is a diagram for explaining another example of the tabular member forming the basket according to the third modification of the embodiment.
[Fig. 11C] Fig. 11C is a diagram for explaining an example of the structure in which the tabular members are changed in the basket according to the third modification of the embodiment.
[Fig. 11D] Fig. 11D is a diagram for explaining another example of the structure of the basket according to the third modification of the embodiment.
[Fig. 11E] Fig. 11E is a diagram for explaining another example of the structure of a reinforcing member.
[Fig. 12A] Fig. 12A is a diagram for explaining tabular members forming a basket according to a fourth modification of the embodiment.
[Fig. 12B] Fig. 12B is a diagram for explaining another example of the tabular member forming the basket according to the fourth modification of the embodiment.
[Fig. 12C] Fig. 12C is a diagram for explaining an example of the structure in which the tabular members are changed in the basket according to the fourth modification of the embodiment.
[Fig. 12D] Fig. 12D is a diagram for explaining an example of the structure in which the tabular members are changed in the basket according to the fourth modification of the embodiment.
[Fig. 13] Fig. 13 is a perspective view of a basket according to a fifth modification of the first embodiment. [Fig. 14A] Fig. 14A is a partially enlarged view of the basket according to the fifth modification of the first embodiment.
[Fig. 14B] Fig. 14B is a partially enlarged sectional view of the basket according to the fifth modification of the first embodiment.
[Fig. 15] Fig. 15 is a diagram for explaining a square pipe forming the basket according to the fifth modification of the first embodiment.
[Fig. 16] Fig. 16 is a plan view of a basket according to a sixth modification of the first embodiment.
[Fig. 17A] Fig. 17A is an enlarged view of an area indicated by B shown in Fig. 16 of the basket according to the sixth modification of the first embodiment.
[Fig. 17B] Fig. 17B is a partially enlarged view of the area indicated by B shown in Fig. 16 of the basket according to the sixth modification of the first embodiment.
[Fig. 18] Fig. 18 is a plan view of a basket according to a second embodiment.
[Fig. 19] Fig. 19 is a sectional view taken along A-A shown in Fig. 18.
[Fig. 20] Fig. 20 is a perspective view of the basket according to the second embodiment.
[Fig. 21A] Fig. 21A is a partially enlarged view of the basket according to the second embodiment.
[Fig. 21B] Fig. 21B is a partially enlarged sectional view of the basket according to the second embodiment.
[Fig. 22] Fig. 22 is a diagram for explaining a square pipe forming the basket according to the second embodiment.
[Fig. 23A] Fig. 23A is a diagram for explaining a tabular member forming the basket according to the second embodiment.
[Fig. 23B] Fig. 23B is a diagram for explaining the tabular member forming the basket according to the second embodiment.
[Fig. 24A] Fig. 24A is a diagram of a basket according to a third embodiment.
[Fig. 24B] Fig. 24B is a diagram for explaining an example of a spacer used in the basket according to the third embodiment.
[Fig. 24C] Fig. 24C is a diagram of a modification of the tabular member forming the basket according to the third embodiment.
[Fig. 25A] Fig. 25A is a diagram of a basket according to a modification of the third embodiment.
[Fig. 25B] Fig. 25B is a diagram of the basket according to the modification of the third embodiment.

### EXPLANATIONS OF LETTERS OR NUMERALS

1, 1a, 1b, 1c, 1d, 1e, 1f, 1g, 1h recycled fuel assembly storage baskets (baskets)
1A, 1B, 2A, 2B, 3A, 3C storage cell rows
10 first square pipes
10a, 14A, 14B, 14C, 14D, 16 square pipes
10FT, 15A, 15B flux traps
10SW, 10aSW, 11SW, 16SW sidewalls
10t₁, 10t₂, 11t₁, 11t₂, 12, 13a, 13b projections
11 second square pipes
20, 22A, 22B, 29, 29a, 29b tabular members
21, 23A, 23B, 26, 31, 31b hollow portions
24 first tabular members
25 second tabular members
30, 30a, 30b projections
32, 32a reinforcing members
40 bottom plate
200 cask
201 barrel main body
201C cavity
204 buffers

### BEST MODE(S) FOR CARRYING OUT THE INVENTION

The present invention is explained in detail below with reference to the drawings. The present invention is not limited by best modes for carrying out the present invention (hereinafter referred to as embodiments). Elements in the embodiments described below include elements that those skilled in the art can easily assumed or elements substantially identical with the elements, i.e., elements in a so-called range of equivalents. A recycled fuel assembly storage basket explained below is mainly used in casters for transportation and storage. However, the recycled fuel assembly storage basket is not limited to this. For example, the recycled fuel assembly storage basket can be used in a concrete cask for storage purpose, a canister, or a rack of a recycled fuel assembly storage pool. The recycled fuel assembly storage basket is abbreviated as basket when necessary.

### (First Embodiment)

A recycled fuel assembly storage basket according to the first embodiment is characterized in that a plurality of storage cell rows formed by arraying a plurality of projections, which are provided on outer sides of sidewalls of square pipes, in contact with each other are provided and solid or hollow tabular members are stacked in a plurality of stages among the storage cell rows with long side ends thereof set in contact with each other. Before the recycled fuel assembly storage basket according to the first embodiment is explained, a recycled fuel assembly storage container is explained.

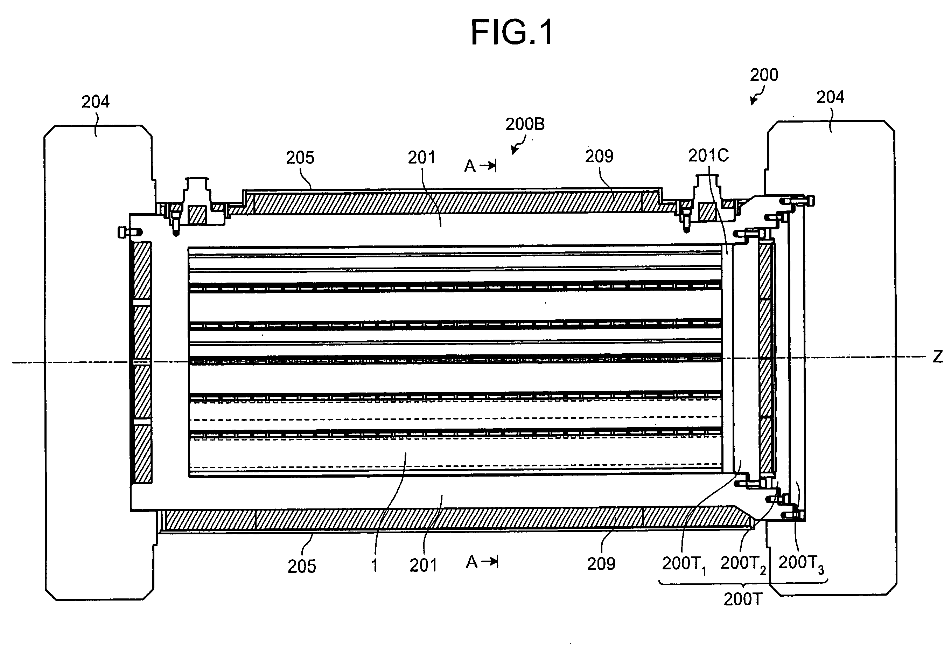

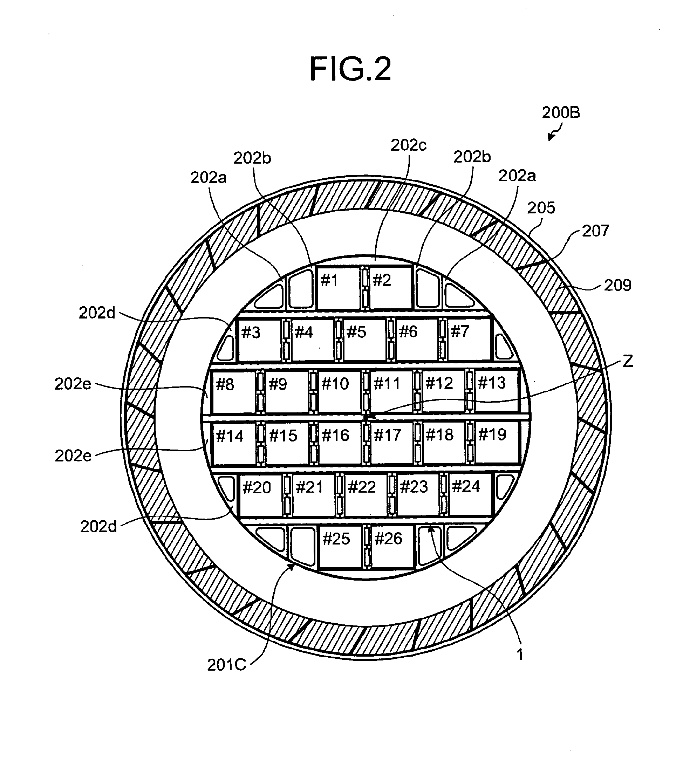

Fig. 1 is a sectional view of an overview of a cask as an example of the recycled fuel assembly storage container. Fig. 2 is a sectional view taken along A-A of the cask shown in Fig. 1. As shown in Fig. 1, a cask 200 includes a lid 200T and a barrel 200B. After recycled fuel assemblies are stored in the barrel 200B, the barrel 200B is sealed by the lid 200T. The barrel 200B of the cask 200 includes, as shown in Fig. 2, a cylindrical barrel main body 201, heat transfer fins 207 attached to an outer circumference of the barrel main body 201, an outer cylinder 205 attached to the other long side ends of the heat transfer fins 207, and a neutron absorbing material 209 filled in a space formed by the outer circumference of the barrel 200B, the heat transfer fins 207, and the outer cylinder 205. The barrel main body 201 is made of carbon steel or stainless steel having sufficient thickness to be caused to display a function of shielding a γ ray. When the barrel main body 201 is made of carbon steel, the thickness of the barrel main body 201 is set to 20 to 30 cm to cause the barrel main body 201 to display a sufficient γ ray shielding function.

A bottom plate can be attached to the cylindrical barrel main body 201 by welding. The barrel main body 201 and the bottom plate can be integrally molded by inserting a metal billet into a container having an internal shape matched to an outer shape of the barrel main body 201 and hot-forming the metal billet with a perforating punch having an external shape matched to an inner shape of the barrel main body 201. Further, the barrel main body 201 can be manufactured by casting.

The inside of the barrel main body 201 is a cavity 201C in which a basket 1 that stores recycled fuel assemblies is housed. A sectional inner shape perpendicular to an axial direction of the cavity 201C (a direction indicated by Z in the figure) is circular. However, cavities having sectional inner shapes such as an octagonal shape, a substantial cross shape, and a stepped shape can also be used. In this embodiment, because the sectional inner shape of the cavity 201C is circular, when the basket 1 having a polygonal external shape is housed, a first spacer 202a to a fifth spacer 202e are interposed between the basket 1 and the cavity 201C to position the basket 1 in the cavity 201C.

The basket 1 is preferably set such that an outer circumferential surface thereof is in contact with an inner wall of the cavity 201C. Consequently, because exchange of heat with the container is performed on a wide surface, it is possible to transfer heat with a small temperature difference while securing a subcritical function. This makes it possible to keep the temperature of stored recycled fuel assemblies low even when a B-SUS material inferior in heat transfer properties compared with a B-A1 material is used and keep the temperature of the stored recycled fuel assembles lower in the case of the B-A1 material.

After the recycled fuel assemblies are stored in the cavity 201C, to prevent radioactive substances from leaking from the inside of the cavity 201C, a primary lid 200T₁, a secondary lid 200T₂, and a tertiary lid T₃ (Fig. 1) are attached to an opening of the barrel to seal the cavity 201C. To secure sealing performance, a metal gasket is provided between the primary and secondary lids 200T₁ and 200T₂ and the barrel main body 201. The tertiary lid T₃ is used for the purpose of further backing up the primary lid T₁ and the secondary lid T₂. However, this lid structure can only include the primary lid and the secondary lid depending on a required specification.

A plurality of heat transfer fins 207 made of tabular members are radially attached to the outer circumference of the barrel main body 201. The heat transfer fins 207 are made of good heat conductors such as aluminum plates or copper plates. The heat transfer fins 207 are attached to the outer circumference of the barrel main body 201 by welding or other bonding means such that heat is transmitted well. The outer cylinder 205 made of carbon steel having the thickness of several centimeters is attached to the outer side of the heat transfer fins 207 by welding or other bonding means. The recycled fuel assemblies stored in the cavity 201C generate decay heat. This decay heat is transmitted through the basket 1a [translator's comment: "basket 1a" should be corrected to "basket 1"] and the barrel main body 201 and, then, conducted to the outer cylinder 205 via the heat transfer fins 207 and discharged to the atmosphere from the surface of the outer cylinder 205.

A material having a neutron absorbing function for absorbing neutrons is filled in a space 209 surrounded by the barrel main body 201, the outer cylinder 205, and two heat transfer fins 207. As the material having such a function, a neutron absorbing material such as resin, polyurethane, or silicon as a polymeric material containing a large quantity of hydrogen can be used. Neutrons discharged from the recycled fuel assemblies are absorbed by this neutron absorbing materials to reduce neutrons leaking to the outside of the cask 200 to be less than a regulated value.

The cask 200 is used for storing the recycled fuel assemblies and, then, transporting and stocking the recycled fuel assemblies. When the cask is transported, as shown in Fig. 1, buffers 204 are attached to both ends in an axis Z direction of the cask to secure sufficient container sealing performance and soundness of the recycled fuel assemblies stored therein even when a falling accident or the like of the cask 200 occurs. A basket according to this embodiment is explained below.

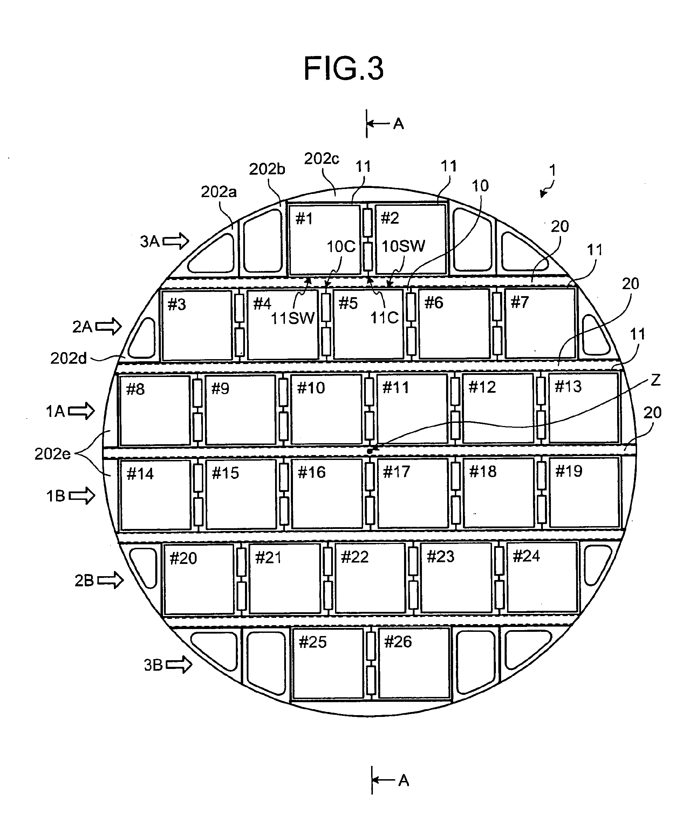

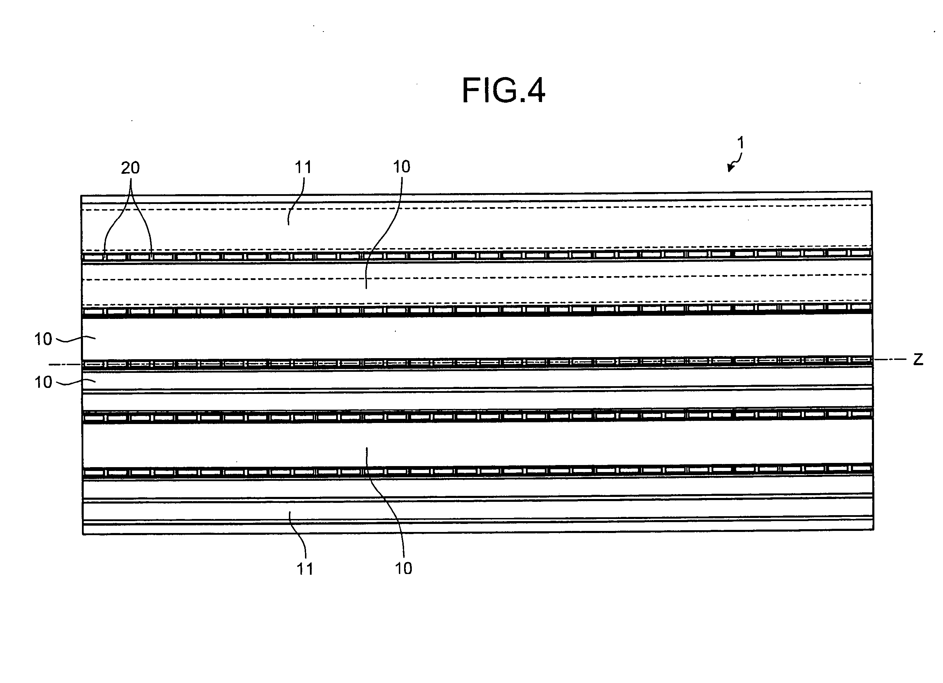

Fig. 3 is a plan view of the basket according to the first embodiment. Fig. 4 is a sectional view taken along A-A shown in Fig. 3. The basket 1 is configured by combining first square pipes 10 and second square pipes 11 and tabular members 20. The recycled fuel assemblies are stored in the inside of the first and second square pipes 10 and 11. The basket 1 according to this embodiment includes twenty-six first and second square pipes 10 and 11 in total. #1 to #26 in Fig. 3 are numbers of the first and second square pipes 10 and 11 and are shown for convenience of explanation.

At least the first and second square pipes 10 and 11 are made of an Al (aluminum) material containing B¹⁰ (boron) (hereinafter referred to as boron-aluminum material) to secure a subcritical function and reduce weight (the same applies in the following explanation). B can be a boron compound such as B₄C (boron carbide). The first and second square pipes 10 and 11 can be manufactured by, for example, hot-rolling or hot-extruding a billet of boron aluminum manufactured by powder metallurgy. A material of the tabular members 20 is not particularly specified and can be a material same as or different from that of the first and second square pipes 10 and 11.

To house the basket 1 in the cavity 201C circular in section (see Fig. 2), the first spacer 202a to the fifth spacer 202e are attached to an outer circumference of the basket 1 and a sectional shape perpendicular to an axis (a basket axis) Z of the basket 1 is set substantially circular. The second square pipes 11 (#1, #2, #3, #7, #8, #13, #14, #19, #20, #24, #25, and #26) are arranged in the outer circumference of the basket 1 and combined with the first spacer 202a to the fifth spacer 202e. The basket 1 can be formed by only the first square pipes 10 by, for example, providing projections that mesh with projections of the first square pipes 10 in the first spacer 202a to the fifth spacer 202e.

In the basket 1, storage cell rows (square pipe rows) 1A, 2A, 3A, 1B, 2B, and 3B that store the recycled fuel assemblies are formed by arraying a plurality of projections, which are provided on outer sides of sidewalls of the first and second square pipes 10 and 11, in contact with each other. The hollow tabular members 20 are stacked in a plurality of stages among the storage cell rows 1A, 1B, and the like with long side ends thereof set in contact with each other (see Fig. 4). A direction of stacking the tabular members 20 is a direction parallel to the axis Z direction of the basket 1 and crosses (in this embodiment, is orthogonal to) the long side ends of the tabular members 20 and the axis Z direction of the basket 1. Such a configuration makes it possible to secure a wide heat transfer area between the first and second square pipes 10 and 11 and the tabular members 20. Surfaces on which the first and second square pipes 10 and 11 are in contact with the tabular members are planes without projections. Therefore, it is possible to easily mold the first and second square pipes 10 and 11 even when a boron-aluminum alloy, which is a material hard to be extruded, is used. The first and second square pipes 10 and 11 and the tabular members 20 forming the basket 1 are explained and the basket 1 is explained more in detail below.

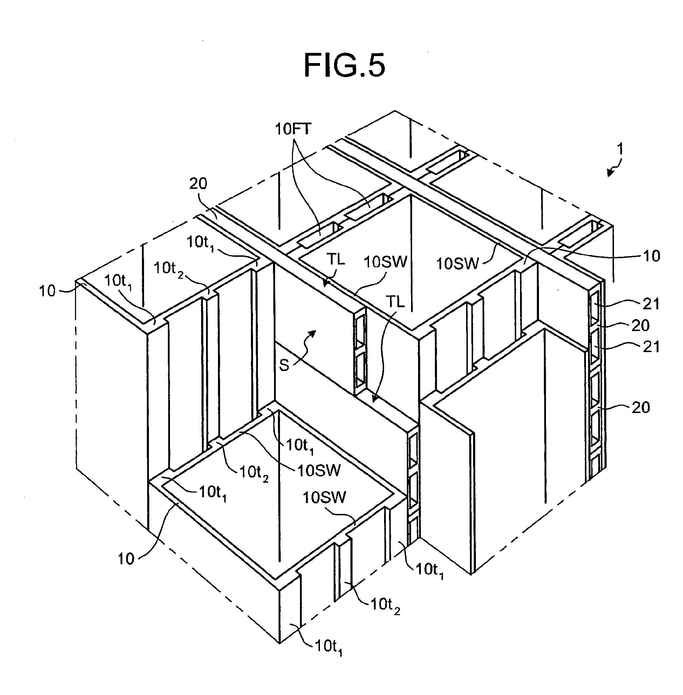

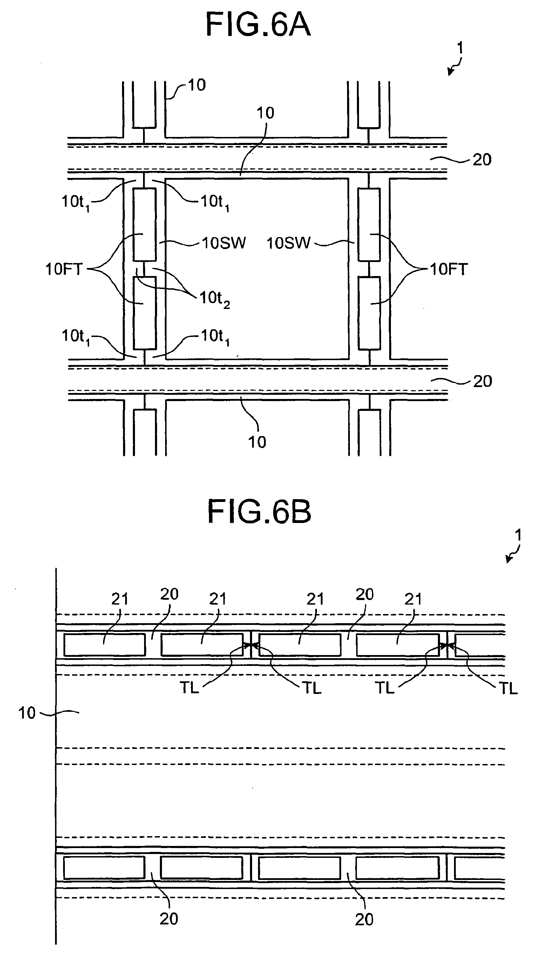

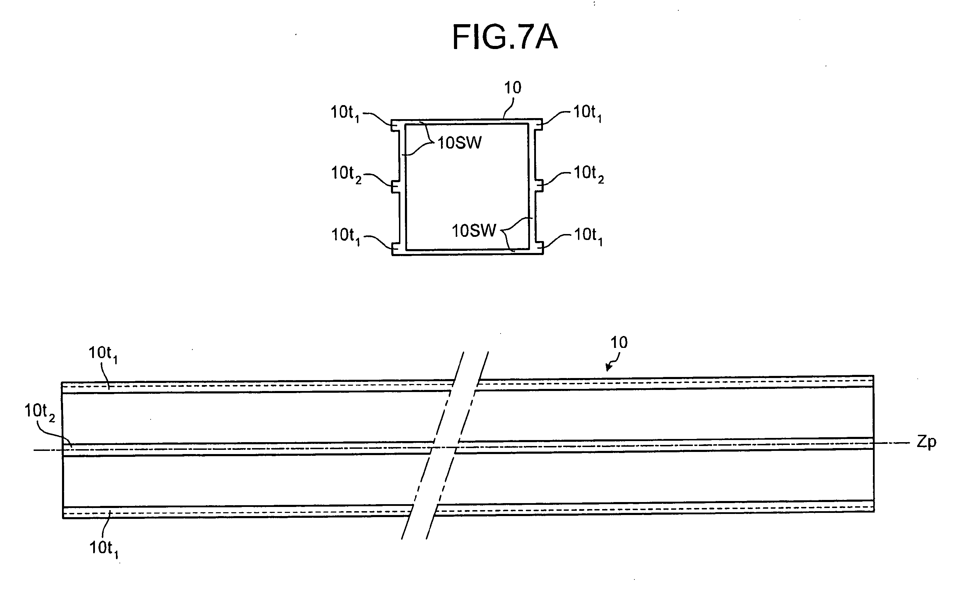

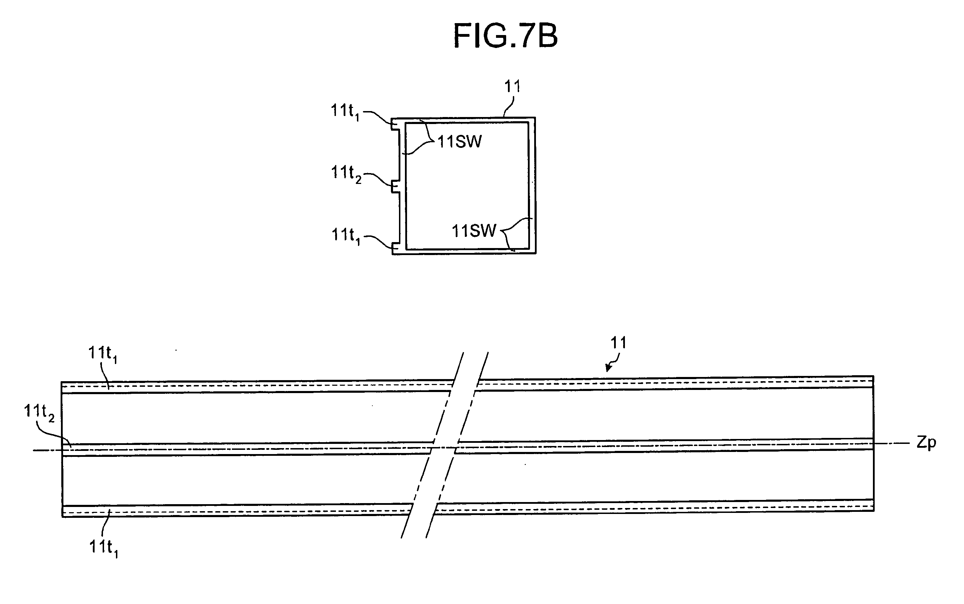

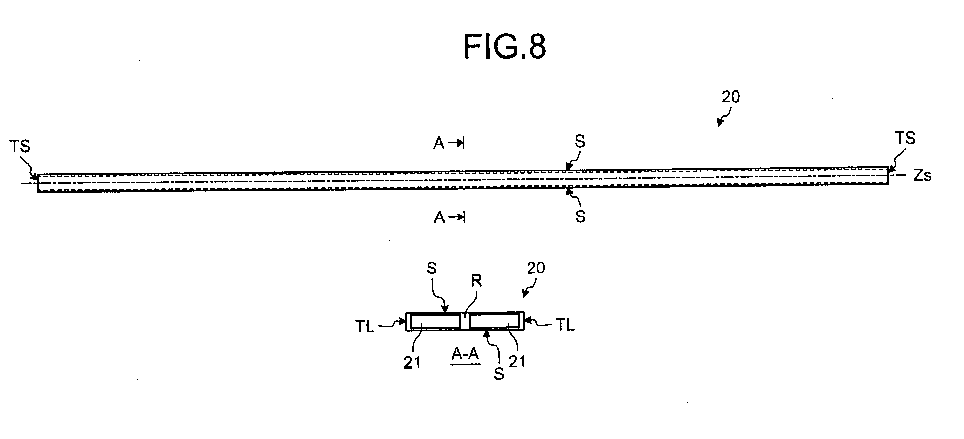

Fig. 5 is a perspective view of the basket according to the first embodiment. Fig. 6A is a partially enlarged view of the basket according to the first embodiment. Fig. 6B is a partially enlarged sectional view of the basket according to the first embodiment. Figs. 7A and 7B are diagrams for explaining a square pipe forming the basket according to the first embodiment. Fig. 8 is a diagram for explaining a tabular member forming the basket according to the first embodiment.

As shown in Figs. 5 and 7A, in the square pipe 10 forming the basket 1 according to the first embodiment, a sectional inner shape perpendicular to an axis Zp of the square pipe 10 is formed in a square shape to match an external shape of recycled fuel assemblies stored therein. In the square pipe 10, projections 10t₁ and 10t₂ are provided on outer sides of opposed sidewalls 10SW. As shown in Figs. 5 and 7B, in the second square pipe 11 forming the basket 1 according to the first embodiment, a sectional inner shape perpendicular to the axis Zp of the second square pipe 11 is formed in a square shape to match an external shape of recycled fuel assemblies stored therein. In the second square pipe 11, projections 11t₁ and 11t₂ are provided on an outer side of one sidewall 11SW.

The projections 11t₂ have a function of, besides transmission of heat, supporting loads with the sidewall 10SW of the square pipe 10 adjacent thereto. When a load condition and a condition of heat are gentle, the projections 11t₂ can be omitted. When the projections 11t₂ are not provided, there is an advantage that molding of the square pipe 10 is easier. The square pipe 10 and the hollow tabular member 20 can be manufactured by bending or bonding a solid tabular member. However, when heat extrusion molding is possible, it is reasonable to manufacture the square pipe 10 and the tabular member 20 with extrusion molding.

When the first square pipes 10 and the second square pipes 11 are arrayed to form the storage cell rows, the projections 10t₁ of the first square pipes 10 adjacent to each other are brought into contact with each other and the projections 10t₂ thereof are brought into contact with each other to linearly array a plurality of the first square pipes 10 (e.g., #9 to #12 of the storage cell row 1A). The second square pipes 11 are arranged in the outer circumference to bring the projections 10t₁ and 10t₂ of the first square pipes 10 into contact with the projections 11t₁ and 11t₂ of the second square pipe 11 (e.g., #8 and #9 of the storage cell row 1A). When a storage cell row is formed by two second square pipes 11 (storage cell rows 3A and 3B), the projections 11t₁ of the second square pipes 11 adjacent to each other are brought into contact with each other and the projections 11t₂ thereof are brought into contact with each other to linearly array the two second square pipes 11 (#1 and #2 and #25 and #26).

The first square pipes 10 and the second square pipes 11 are arrayed in this way to form the storage cell rows 1A, 2A, 3A, 1B, 2B, and 3B. As it is seen from Fig. 3, the storage cell row 3A and the storage cell row 2A as well as the storage cell rows 3B and the storage cell rows 2B are arranged to be shifted from each other by predetermined length (a half of the length of one side of the first square pipes 10 and the like) with respect to an arraying direction of the first and second square pipes 10 and 11. In other words, in at least one pair of storage cell rows (e.g., the storage cell row 3A and the storage cell row 2A), a corner 10C of the first square pipe 10 in one storage cell row (the storage cell row 3A) is located in a position of the sidewall 11SW of the second square pipe 11 in the other storage cell row (the storage cell row 2A). Similarly, a corner 11C of the second square pipe 11 in one storage cell row (the storage-cell row 3A) is arranged in a position of the sidewall 10SW of the first square pipe 10 in the other storage cell row (the storage cell row 2A). When a space of projections matching the arrangement positions is set, this shift among the rows is "about a half of the length of one side".

This makes it possible to arrange a large number of the first square pipes 10 and the second square pipes 11 in a limited section (a section orthogonal to the axis Z of the basket 1). Therefore, the square pipes 10 and the second square pipes 11 are arranged via the tabular members. The projections of the square pipes 10 and the second square pipes 11 can keep the first square pipes 10 and the second square pipes 11 in optimum positions in the positions of the square pipes 10 and the second square pipes 11. Therefore, it is possible to increase the number of stored recycled fuel assemblies while suppressing an increase in dimensions of the cask 200. In particular, the effect of the increase in the number of stored recycled fuel assemblies is large in recycled fuel assemblies for PWR having large dimensions.

As shown in Fig. 6A, when the projections 10t₁ of the first square pipes 10 adjacent to each other are brought into contact with each other and the projections 10t₂ thereof are brought into contact with each other, spaces surrounded by the projections 10t₁ and the projections 10t₂ are flux traps 10FT that absorb neutrons radiated from the recycled fuel assemblies. This secures subcriticality when the recycled fuel assemblies are stored in the first and second square pipes 10 and 11. The same holds true between the second square pipes 11 adjacent to each other (#1 and #2 and #25 and #26) and between the first square pipe 10 and the second square pipe 11 (e.g., #4 and #3) in the outer circumference of the basket 1. The height of the projections can be set to height with which flux traps can be formed in places where the first square pipes 10 and the second square pipes 11 are arranged. Therefore, it is possible to suppress an increase in dimensions of the cask. An area of portions where the projections 10t₁ and 11t₁ are in contact is determined by taking into account heat transfer performance and the magnitude of stress acting on the projections 10t₁ and 11t₂ when the cask 200 falls.

As shown in Figs. 3, 5, and 6B, the hollow tabular members 20 are stacked between the storage cell rows 1A and 2A, between 1B and 2B, between 2A and 3A, and between 2B and 3B with long side ends TL set in contact with each other. As shown in Fig. 8, the tabular member 20 includes two hollow sections 21. A sectional shape perpendicular to an axis Zs direction of the tabular member 20 is a substantial B shape. The axis Zs direction of the tabular member 20 is parallel to a piercing-through direction of the hollow sections 21. When the tabular member 20 is arranged between the storage cell rows, the hollow sections 21 of the tabular member 20 function as flux traps that absorb neutrons radiated from the recycled fuel assemblies and secure subcriticality. When a dimension on the long sides of the tabular member 20 is set large, the number of ribs R may be small when the sectional shape perpendicular to the axis Zs direction is the substantial B shape. In this case, the tabular member 20 is formed in a shape that can safely support the first square pipe 10 and the second square pipe 11 by arranging the ribs R at appropriate intervals with the sectional shape formed in, for example, a substantial double-B shape When the dimension on the long side of the tabular member 20 is set small, the number of ribs R may be excessively large when the sectional shape perpendicular to the axis Zs direction is the substantial B shape. In this case, the tabular member 20 is formed in a shape that can rationally and safely support the first square pipe 10 and the second square pipe 11 by omitting the ribs R with the sectional shape formed in, for example, a square shape. To eliminate the water and air accumulated in the hollow sections 21 of the tabular member 20, holes piercing through to the hollow sections 21 can be provided at predetermined intervals in the long side ends TL of the tabular member 20.

A basket that stores recycled fuel assemblies by combining tabular members in a cake box shape and using spaces surrounded by the tabular members as storage cells for the recycled fuel assemblies is known. In such a basket, because intervals of the storage cells can be adjusted only by adjusting the thickness of the tabular members, it may be inevitable to set excess spaces depending on positions of the storage cells. In the basket 1 according to this embodiment, intervals of the storage cells can be adjusted by changing both the thickness of the tabular member 20 and the height of the projections 10t₁ and 11t₁ and the like of the first square pipes 10 and the second square pipes 11. Consequently, even in places where the intervals of the storage cells cannot be adjusted in the basket of the cake box shape in the past, it possible to more appropriately set the intervals of the storage cells than in the past. As a result, the basket 1 according to this embodiment can be formed more compact than the basket of the cake box shape in the past.

As shown in Fig. 8, one rib R is provided in the tabular member 20 and a section of the tabular member 20 is formed in a B shape by the rib R. The number of ribs R is not limited to one. The thickness of the rib R and the thickness at the long side ends TL of the tabular member 20 are determined by taking into account heat transfer performance and the magnitude of the stress acting on the rib R and the long side ends TL when the cask 200 falls.

In the tabular members 20 stacked in a plurality of stages and arranged between the storage cell rows 1A and 2A and the like, the sides S thereof and the sides of the first and second square pipes 10 and 11 are in contact with each other. In the basket 1 according to this embodiment, because a contact area between the tabular members 20 and the first and second square pipes 10 and 11 is large, heat transfer performance is improved. In the basket 1 according to this embodiment, because the shock at the time when the cask 200 falls can be received with a wider area, shock resistance performance is also improved. These points are advantageous when the recycled fuel assemblies having a large heating value and large mass are stored. A first modification of this embodiment is explained below.

### (First Modification)

Tabular members and square pipes according to the first modification of this embodiment have substantially the same structure as the tabular members and the square pipes described above. However, the tabular members and the square pipes according to the first modification are different in that cutouts are provided in portions opposed to the bottom of a cavity formed in a barrel main body of a cask that houses a basket.

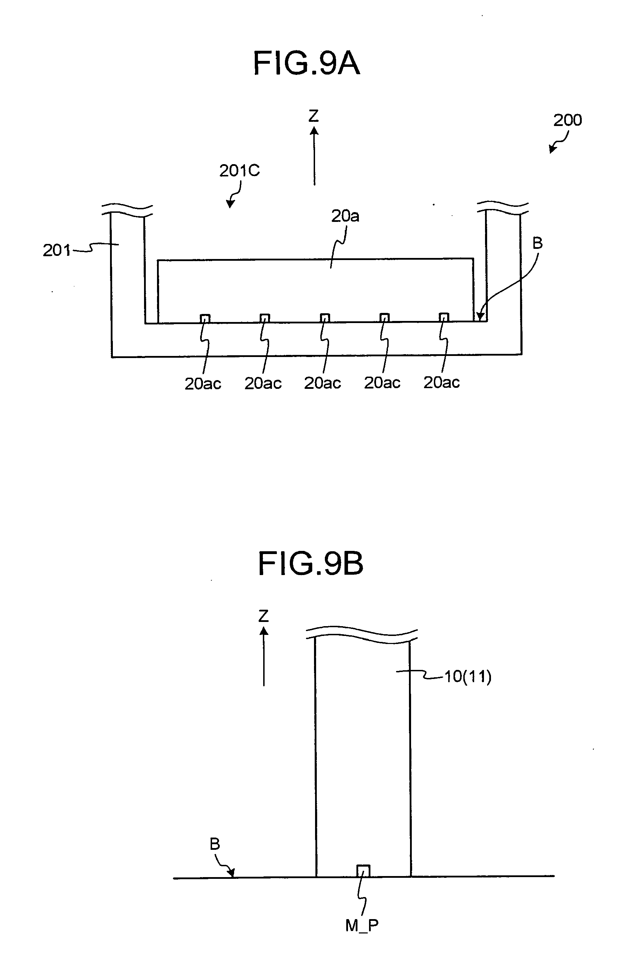

Fig. 9A is a diagram for explaining the tabular member according to the first modification of this embodiment. Fig. 9B is a diagram for explaining the square pipe according to the first modification of this embodiment. As shown in Fig. 9A, in a tabular member 20a according to this modification, the cavity 201C is formed in the barrel main body 201 of the cask 200. The basket 1 shown in Fig. 1 is stored in the cavity 201C. In the tabular member 20a forming the basket, cutouts 20ac are provided in a bottom B of the cavity 201C, i.e., portions opposed to the bottom B of the cask 200 (at a long side end). As shown in Fig. 9B, in the square pipe 10 (11) forming the basket, a cutout M_P is provided in the bottom B of the cavity 201C, i.e., a portion opposed to the bottom B of the cask 200 (at an end).

In this way, in the tabular member 20a and the square pipe 10 (11) forming the basket according to this modification, the cutouts 20ac and M_P are provided in the portions opposed to the bottom B of the cask 200. Therefore, drainage from the basket is improved. The cutouts 20ac and M_P function as exhaust passages during vacuum drying as well. Therefore, it is possible to reduce time required for the vacuum drying. Further, it is possible to reduce a contact area between the tabular member 20a and the square pipe 10 (11) forming the basket and the bottom B of the cask 200. Therefore, it is possible to reduce heat transmitted from the basket to the barrel main body 201C with which the tabular member 20a and the square pipe 10 (11) forming the basket is directly in contact. This makes it possible to maintain the temperature of the barrel main body 201C low compared with the temperature at the time when the cutouts 20ac and M_P are not provided in the tabular member 20a and the square pipe 10 (11). As a result, it is possible to suppress thermal deterioration of a material having neutron absorbing function (a neutron shielding material) arranged on the bottom B side of the barrel main body 201C and cause the material to display neutron shielding performance throughout a storage period of several tens years. A shape of the cutouts 20ac and M_P can be a rectangular shape, an arc shape, or a shape obtained by combining the rectangular shape and the arc shape.

### (Second Modification)

A second modification of this embodiment is characterized in that an area of a portion where a long side end of a tabular member forming a basket is in contact with a long side end of a tabular member adjacent thereto is smaller than an area of a section of the tabular member when the tabular member is cut by a plane parallel to a surface forming the long side end of the tabular member. With such a configuration, for example, a projection (a projected streak) extending in a longitudinal direction of the tabular member is formed in the long side end of the tabular member.

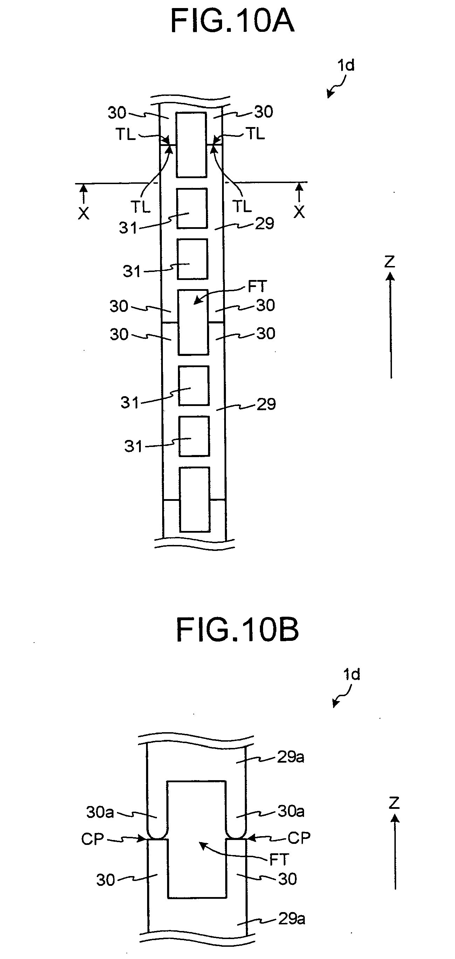

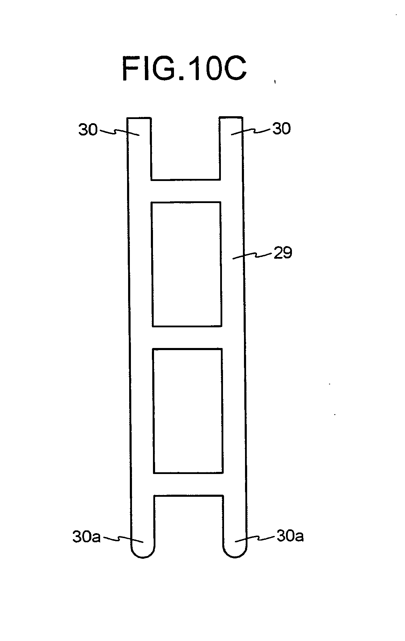

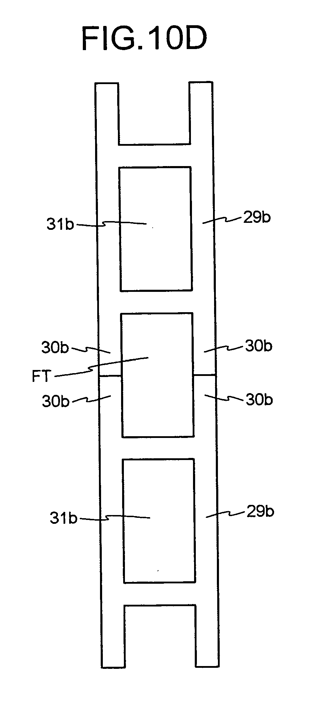

Fig. 10A is a diagram for explaining the tabular member forming the basket according to the second modification of this embodiment. Fig. 10B is an enlarged view of a portion where long side ends of the tabular member shown in Fig. 10A are in contact with each other. Fig. 10C is a diagram for explaining the tabular member shown in Fig. 10B. Fig. 10D is a diagram for explaining another example of the tabular member forming the basket according to the second modification of this embodiment. A tabular member 29 forming a basket 1d includes two hollow sections 31 in the same manner as the tabular member 20 shown in Fig. 8. The two hollow sections 31 are rectangular in section and pierce through the tabular member 29 in a longitudinal direction thereof. Projections 30 are formed at a long side end TL of the tabular member 29 in a longitudinal direction of the tabular member 29 and over the entire length in the longitudinal direction of the tabular member 29.

By providing the projections 30 at the long side end TL, at the long side end TL of the tabular member 29, an area St of a portion in contact with a long side end of a tabular member adjacent thereto is smaller than an area Sd of a section (a section taken along X-X shown in Fig. 10A) of the tabular member when the tabular member 29 is cut by a plane parallel to a surface forming the long side end TL of the tabular member 29. The long side end TL where the tabular members 29 are in contact with each other accumulates water with the viscosity or the surface tension of the water. Therefore, it is preferable to form the portion where the tabular members 29 are in contact with each other as small as possible. This makes it possible to reduce an area of the portion where the tabular members 29 are in contact with each other. Therefore, it is possible to reduce the moisture remaining in the basket 1d and reduce time required for vacuum drying. Further, because the moisture remaining in the basket 1d can be reduced, even when nonvolatile impurities are contained in the water, an amount of the impurities can be reduced. Therefore, it is possible to reduce the risk of corrosion due to the impurities.

As in a tabular member 29a shown in Figs. 10B and 10C, distal ends of the projections 30 at one long side end can be formed in a flat shape and distal ends of projections 30a at the other long side end can be formed in an arc shape. This makes it possible to further reduce an area of a portion (a contact portion) CP where the projections 30 and the projections 30a are in contact with each other. Therefore, it is possible to further reduce the moisture remaining in the basket 1d. When the tabular members 29a are stacked, the projections 30a formed in the arc shape are supported by the projections 30 formed in the flat shape. Therefore, the tabular members 29a can be stably stacked and work efficiency is improved. In this modification, as in tabular members 29b shown in Fig. 10D, one tabular member 29b can include one hollow section 31b.

In the basket 1d shown in Figs. 10A and 10B, spaces FT surrounded by the projections 30, 30a, and 30b are formed in portions where the tabular members 29, 29a, 29b are in contact with each other, respectively. Consequently, because the water easily flows through the spaces FT, it is possible to improve drainage. Because the wide spaces FT are secured in the portions where the tabular members 29, 29a, 29b are in contact with each other, respectively, exhaust during vacuum drying is facilitated and it is possible to reduce time required for the vacuum drying.

### (Third Modification)

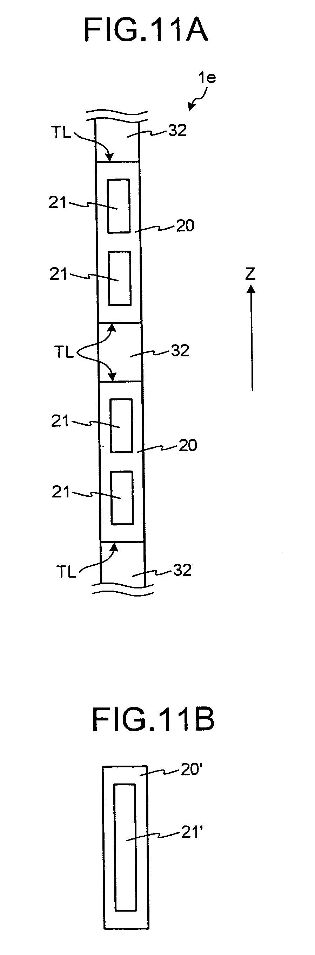

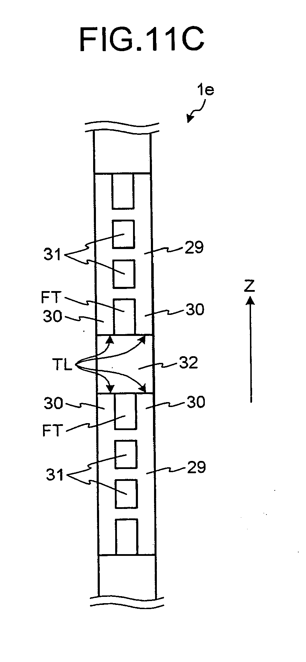

A basket according to a third modification of this embodiment is characterized in that reinforcing members are provided among the tabular members. Fig. 11A is a diagram for explaining tabular members forming the basket according to the third modification of this embodiment. Fig. 11B is a diagram for explaining another example of the tabular member forming the basket according to the third modification of this embodiment. Fig. 11C is a diagram for explaining an example of the structure in which the tabular members are changed in the basket according to the third modification of this embodiment. As shown in Fig. 11A, a basket 1e is configured by arranging a reinforcing member 32 rectangular in section between the tabular members 20. The reinforcing member 32 is arranged in contact with the long side ends TL of the tabular members 20. A hollow member having a hole piercing through the member in a longitudinal direction can be used as the reinforcing member 32. This makes it possible to reduce the weight of the reinforcing member 32. Therefore, it is possible to realize a reduction in weight of the basket 1e.

Instead of the tabular member 20, a tabular member 20' having one hollow section 21' shown in Fig. 11B can be used. In the basket 1e shown in Fig. 11C, the tabular members 29 having the projections 30 formed at the long side ends TL are used instead of the tabular members 20 forming the basket 1e shown in Fig. 11A. The reinforcing member 32 is arranged between the tabular members 29. The projections 30 of the tabular member 29 are in contact with the reinforcing member 32.

The tabular members 20 forming the basket 1e are made of, for example, an aluminum alloy containing boron or a boron compound. The reinforcing member 32 is made of a material having strength higher than that of the tabular members 20, for example, stainless steel. When the reinforcing member 32 is made of the material having high strength such as stainless steel, the reinforcing member 32 is preferably made of a material containing boron or a boron compound from the viewpoint of shielding neutrons. In the basket 1e according to this modification, a shock load on the basket 1e can be received mainly by the reinforcing member 32. This makes it unnecessary to increase the thickness of the tabular members 20 and the like made of the aluminum alloy to receive the shock load on the basket 1e. Therefore, it is possible to make the tabular members 20 and the like compact. As a result, it is possible to make dimensions of the basket 1e compact.

The reinforcing member 32 is preferably arranged in, for example, a position corresponding to a supporting lattice for recycled fuel assemblies stored in the basket 1e. This makes it possible to receive, with the reinforcing member 32, a load on the basket 1e caused by the recycled fuel assemblies stored in the basket 1e. Therefore, it is possible to effectively reduce a load born by the tabular members 30.

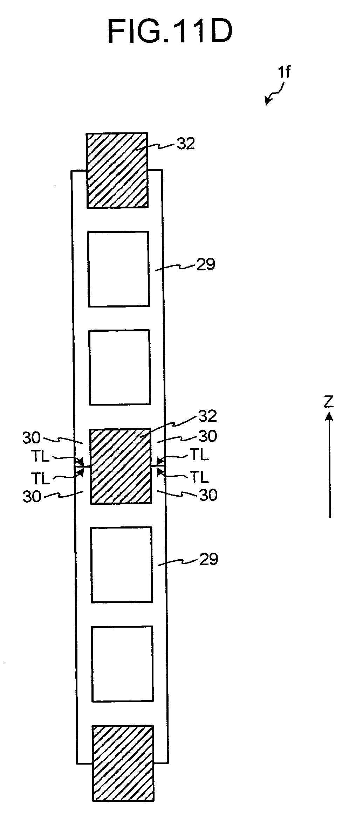

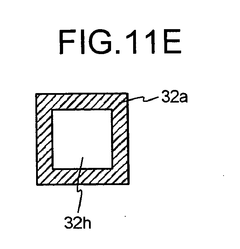

Fig. 11D is a diagram for explaining another example of the structure of the basket according to the third modification of this embodiment. Fig. 11E is a diagram for explaining another example of the structure of the reinforcing member. In a basket 1f shown in Fig. 11D, the tabular members 29 (see Fig. 10A) forming the basket 1d according to the second modification of the first embodiment are stacked with the long side ends TL thereof set in contact with each other. The reinforcing member 32 rectangular in section is arranged in a space surrounded by the projections 30 formed at the long side ends TL. This also makes it possible to obtain actions and effects same as those of the basket 1e (Figs. 11A and 11C) described above. As.shown in Fig. 11E, a hollow member having a hole piercing through the member in a longitudinal direction can be used as the reinforcing member 32.

As in the basket 1f shown in Fig. 11D, when the reinforcing member 32 is arranged in the space surrounded by the projections 30 formed at the long side ends TL, the tabular members 29 excellent in heat transfer properties are in contact with surfaces in contact with square pipes. Therefore, even when a material superior to the tabular members 32 in strength and inferior to the tabular member 32 in heat transfer properties is used for the reinforcing member 32, the basket 1f is not inferior in the heat transfer properties compared with the basket 1e shown in Fig. 11A. The risk of corrosion due to contact of different kinds of metal between the basket 1f and the square pipes can be prevented.

### (Fourth Modification)

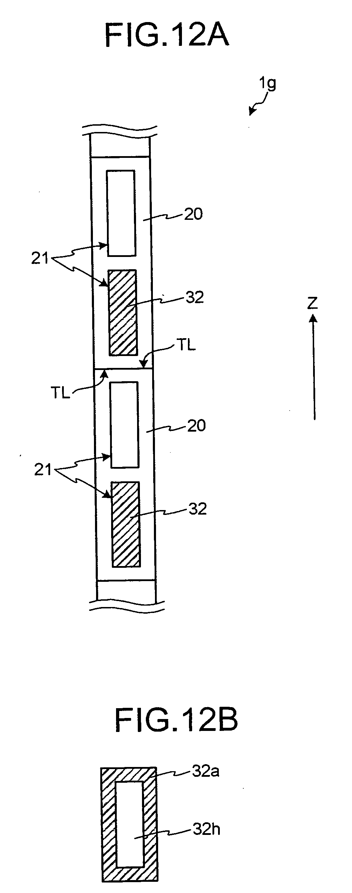

A basket according to a fourth aspect of this embodiment is characterized in that a reinforcing member is provided as an intra-tabular member reinforcing member in a hollow section formed in a tabular member. Fig. 12A is a diagram for explaining tabular members forming the basket according to the fourth modification of this embodiment.

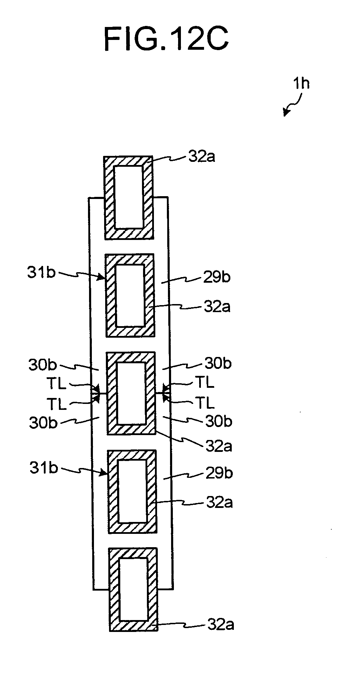

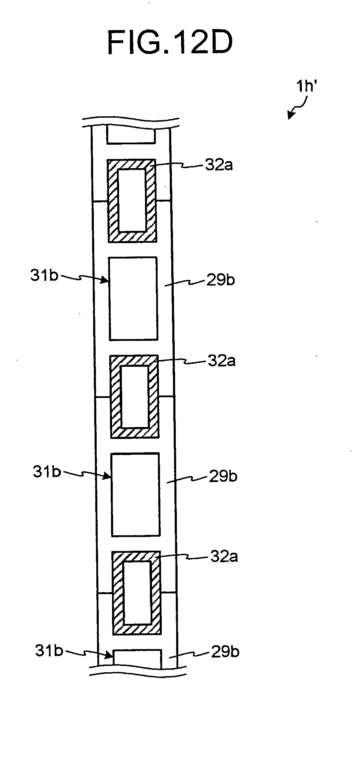

Fig. 12B is a diagram for explaining another example of the tabular member forming the basket according to the fourth embodiment of this embodiment. Figs. 12C and 12D are diagrams for explaining an example of the structure in which the tabular members are changed in the basket according to the fourth modification of this embodiment.
As shown in Fig. 12A, a basket 1g is configured by stacking the tabular members 20 each including the two hollow sections 21 with the long side ends TL set in contact with each other. The hollow sections 21 of the tabular members 20 are rectangular in section and pierce through the tabular members 20 in a longitudinal direction thereof.

The reinforcing member 32 as an intra-tabular member reinforcing member is provided in at least one of the two hollow sections 21 included in each of the tabular members 20. In this embodiment, the reinforcing member 32 is provided in one of the two hollow sections 21. A hole 32h piercing through the tabular member 20 in the longitudinal direction can be formed as in a reinforcing member 32a serving as an intra-tabular member reinforcing member shown in Fig. 12B. This makes it possible to reduce the weight of the reinforcing member 32a. Therefore, it is possible to realize a reduction in weight of the basket 1f.

In a basket 11h shown in Fig. 12C, the tabular members 29b (see Fig. 10D) according to the second modification of the first embodiment are stacked with the long side ends TL set in contact with each other. The hollow reinforcing members 32a (see Fig. 12B) rectangular in section are arranged in a space surrounded by the projections 30b formed at the long side ends TL. The hollow reinforcing members 32a rectangular in section are arranged in the hollow sections 31b formed in the tabular members 29b. The reinforcing members 32a can be solid or can be solid or hollow depending on positions where the reinforcing members are arranged. For example, the solid reinforcing member is arranged between the tabular members 29b to secure strength. The hollow reinforcing members are arranged in the hollow sections 31b of the tabular members 29b to suppress increases in strength and weight. In a basket 1h' shown in Fig. 12D, the reinforcing members 32a are arranged only in necessary places of the tabular members 29b. In this way, in this modification, the reinforcing members 32a can be arranged as required. Therefore, it is possible to easily cope with a change in a specification of a basket.

The tabular members 29 and 29b forming the baskets 1e and 1h are made of, for example, an aluminum alloy containing boron or a boron compound. The reinforcing members 32 and 32a are made of, for example, stainless steel. When the reinforcing members 32 and 32a are made of stainless steel, it is preferable to use stainless steel containing boron or a boron compound from the viewpoint of shielding neutrons. In the baskets 1e and 1h according to this modification, a shock load on the basket 1e and 1h can be received mainly by the reinforcing members 32 and 32a. This makes it unnecessary to increase the thickness of the tabular members 29 and 29b made of the aluminum alloy to receive a shock load on the baskets 1e and 1h. Therefore, it is possible to make the tabular members 29 and 29b compact. As a result, it is possible to make dimensions of the baskets 1e and 1h compact. The reinforcing members 32 and 32a are arranged in the tabular members 29 and 29b that are in contact with the first and second square pipes 10 and 11 (see Figs. 7A and 7B). The reinforcing members 32 and 32a are made of stainless steel having heat conductivity lower than the aluminum alloy. However, the tabular members 29 and 29b made of the aluminum alloy having high heat conductivity are arranged on outer sides of the reinforcing members 32 and 32a and are in contact with the first and second square pipes 10 and 11. Therefore, heat transmitted from the first and second square pipes 10 and 11 can be efficiently transmitted to the tabular members 29 and 29b. This makes it possible to secure heat transfer performance of the baskets 1g and 1h.

### (Fifth Modification)

A basket according to a fifth modification of this embodiment is similar to the basket according to the first embodiment (see Figs. 3 to 5). However, the basket according to the fifth modification is different in that slopes are provided in projections provided on outer sides of sidewalls of square pipes. Otherwise, the basket according to the fifth modification is the same as the basket according to the first embodiment.

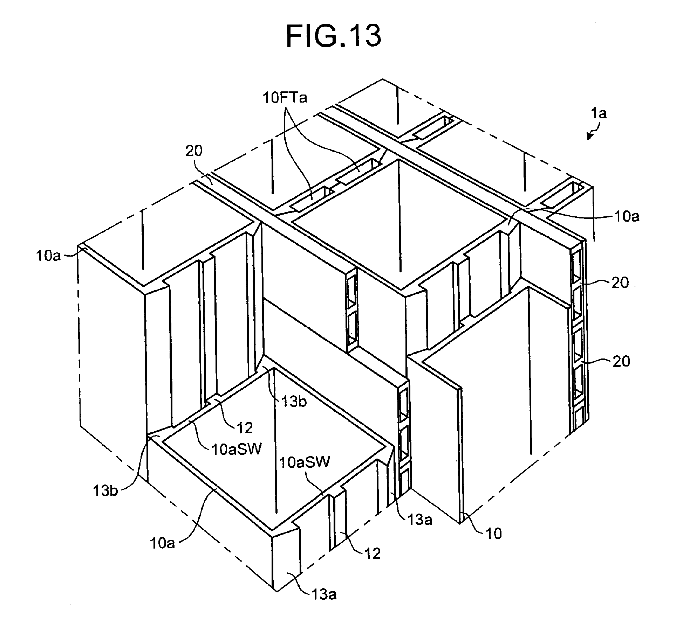

Fig. 13 is a perspective view of the basket according to the fifth modification of the first embodiment.

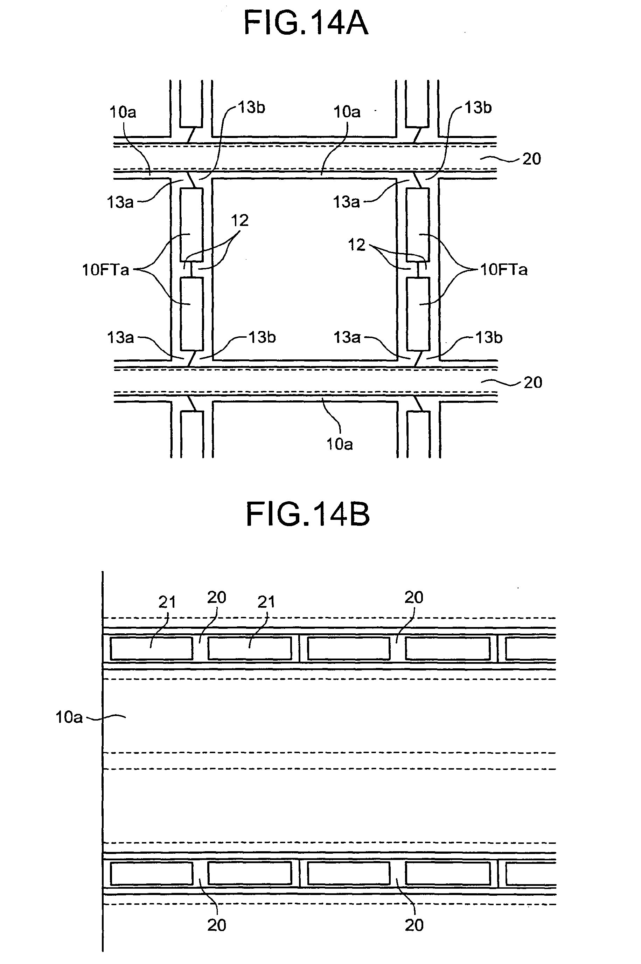

Fig. 14A is a partially enlarged view of the basket according to the fifth modification of the first embodiment.

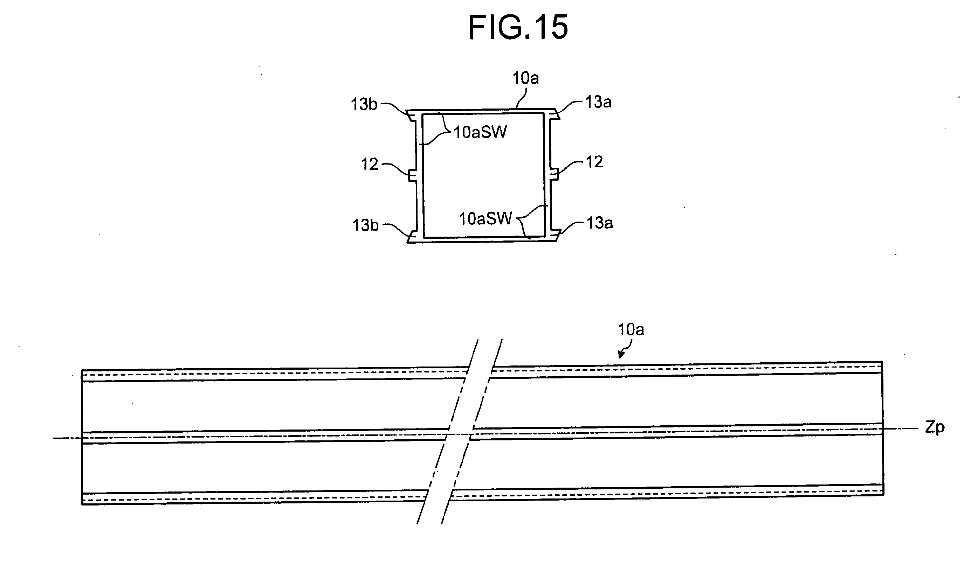

Fig. 14B is a partially enlarged sectional view of the basket according to the fifth modification of the first embodiment. Fig. 15 is a diagram for explaining a square pipe forming the basket according to the fifth modification of the first embodiment. As shown in Figs. 13, 14A, and 14B, a basket 1a according to this modification is the same as the basket 1 according to the first embodiment (see Figs. 3, 4, and 5). The tabular members 20 are stacked in a plurality of stages among storage cell rows formed by linearly arraying square pipes 10a.

As shown in Figs. 13, 14A, and 15, in the square pipe 10a forming the basket 1a according to the fifth modification of the first embodiment, projections 12 and 13a and projections 12 and 13b are provided on outer sides of sidewalls 10aSW opposed to each other, respectively. In a section orthogonal to an axis Zp of the square pipe 10a, contact portions of the projections 13a and 13b provided at corners of the square pipe 10a are inclined with respect to wall surfaces of the sidewalls 10aSW of the square pipe 10a. The height of the projections 13a from the wall surface of the sidewall 10aSW increases toward the projection 12. The height of the projections 13b from the wall surface of the side wall 10aSW decreases toward the projection 12. When the projections 13a and the projections 13b are brought into contact with each other, the projections 13a and the projections 13b overlap.

With such a configuration, when the square pipes 10a are combined, there are an advantage that the square pipes 10a less easily shift from each other and an advantage that a heat transfer area is large. Consequently, heat transfer efficiency and power transmission efficiency between square pipes 10a are improved. Because the square pipes 10a less easily shift from each other, work efficiency in assembling the basket 1a is also improved. A gradient of one surface is shown in the figure. However, if two gradients toward opposite directions are given to one projection, the square pipe can be restrained from turning. Force for causing bend in the projections can be offset when force is transmitted. A sixth modification of this embodiment is explained.

### (Sixth Modification)

A basket according to a sixth modification of this embodiment is similar to the basket according to the first embodiment (see Figs. 3 to 5). However, the basket according to the sixth modification is different in that the size of flux traps is changed according to positions in the basket. Otherwise, the basket according to the sixth modification is the same as the basket according to the first embodiment.

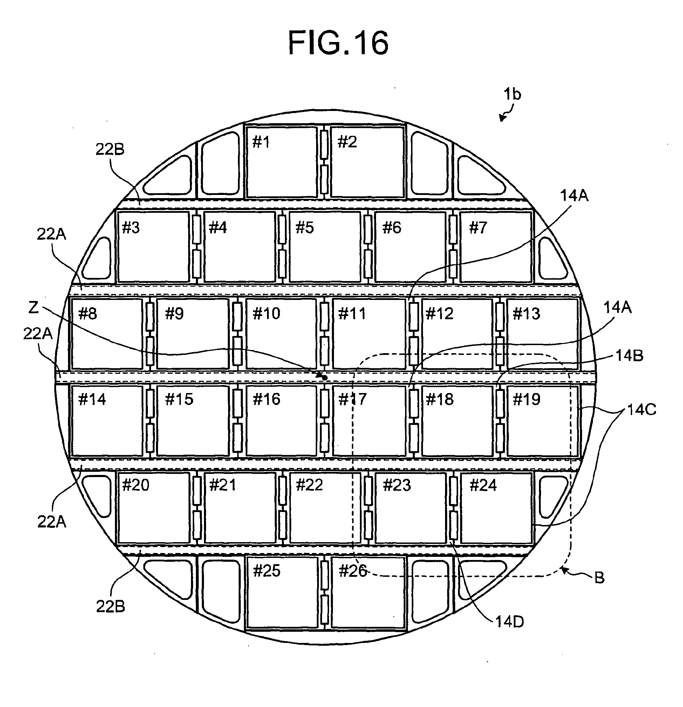

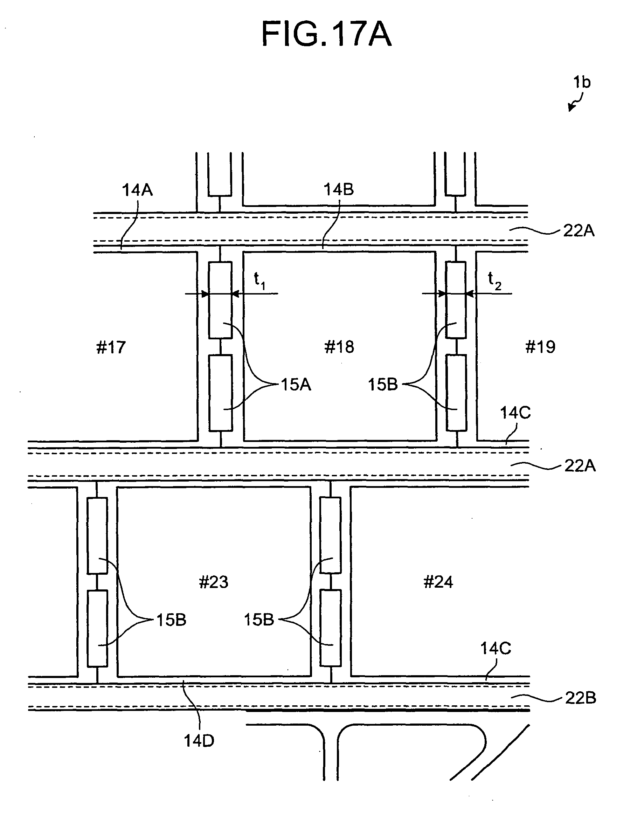

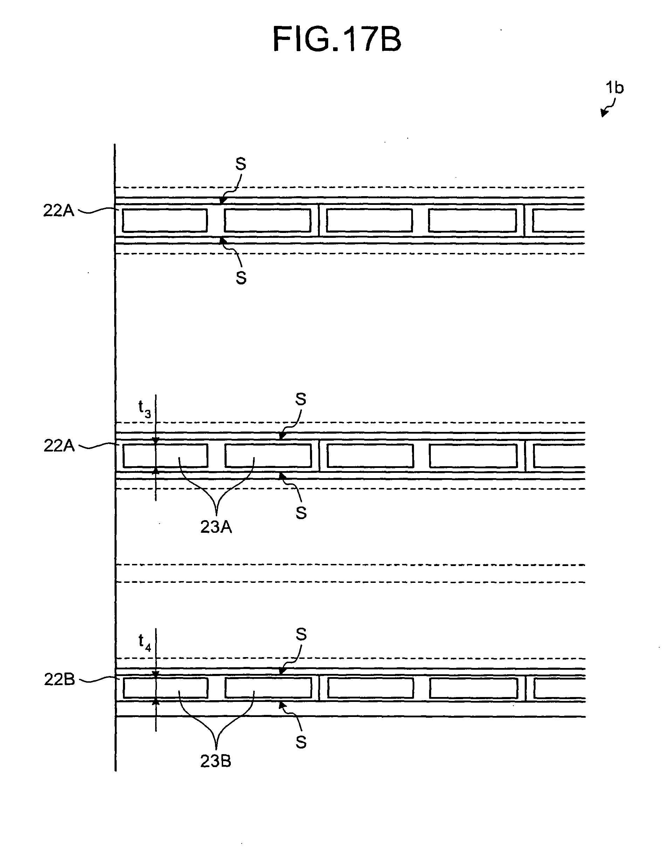

Fig. 16 is a plan view of the basket according to the sixth modification of the first embodiment. Fig. 17A is an enlarged view of an area indicated by B shown in Fig. 16 of the basket according to the sixth modification of the first embodiment. Fig. 17B is a partially enlarged sectional view of an area indicated by B shown in Fig. 12 of the basket according to the sixth modification of the first embodiment.

As shown in Figs. 16, 17A, and 17B, in a basket 1b according to this modification, the heights of projections of square pipes 14A to 14D are varied, dimensions of hollow sections in a direction orthogonal to sides of tabular members are varied between the tabular members 22A and 22B, and dimensions of flux traps are varied in the basket 1b. In the basket 1b according to this modification, neutron absorbing performance in the center of the basket 1b is improved by setting dimensions of flux traps formed by square pipes and tabular members arranged in the center, i.e., around an axis Z large compared with the other portions. Recycled fuel having a high degree of burn-up is arranged around the center of the basket 1b. As described above, this can be attained by, other than changing the heights of the projections of the square pipes and the thickness of the tabular members, only changing the heights of the projections of the square pipes depending on specifications of fuel or changing the thicknesses of the tabular members while keeping the heights of the projections of the square pipes the same. It is possible to select means (an arrangement pattern) matching the specifications of fuel and suitable for highly dense storage.

As shown in Fig. 17A, a dimension t1 of flux traps 15A formed by the square pipe 14A and the square pipe 14B in a direction perpendicular to a sidewall of the square pipe is larger than a dimension t2 of flux traps 15B formed by the square pipe 14B and the square pipe 14C and by the square pipe 14D and the square pipe 14C. As shown in Fig. 17B, the tabular member 22A at a top stage in the figure is present in a position traversing the center of the basket. A value of a hollow section 23A in a direction perpendicular to a side of the tabular member is the largest. A dimension of the hollow section 23A in a direction perpendicular to a side of the tabular member located in the center of the figure is the same as or slightly smaller than a value at the top stage or is larger than a dimension of the hollow section 23B in a direction perpendicular to a side of the tabular member 22B at a bottom stage in the figure. This makes it possible to set flux traps around the center of the basket 1b larger than those in the other portions.

As in the basket 1b according to this modification, it is possible to easily vary dimensions of flux traps in the basket 1b by changing dimensions of the projections formed on outer sides of sidewalls of the square pipes and dimensions of the hollow sections of the tabular members. This makes it possible to change the flux traps according to a degree of burn-up of recycled fuel assemblies stored in the basket 1b. It is preferable to form the dimensions of the flux traps to increase from the outer sides of the basket 1b toward the center.

The center of the basket 1b receives radiation from recycled fuel stored in cells around the center as well. Therefore, it is necessary to set the flux traps larger than those in an outer circumference of the basket 1b. On the other hand, in the outer circumference of the basket 1b, because the number of cells is smaller in the periphery than that in the center, radiation from the recycled fuel is less than that in the center. When flux traps in the entire basket 1b are formed with dimensions of flux traps required in the center, dimensions of the flux traps in the outer circumference are larger than necessary. This causes an increase in mass of the basket and an increase in dimensions. Therefore, the flux traps are formed such that dimensions thereof increase from the outer side toward the center of the basket 1b. In this way, an increase in mass and an increase in dimensions of the basket 1b are suppressed.

As explained above, in this embodiment and the modifications of the embodiment, a plurality of storage cell rows formed by arraying a plurality of projections, which are provided on outer sides of sidewalls of square pipes, in contact with each other are provided and hollow tabular members are stacked in a plurality of stages among the storage cell rows with long side ends thereof set in contact with each other. This makes it possible to increase a heat transfer area between the square pipes and the tabular members and form flux traps among the square pipes in which recycled fuel assemblies are stored. Therefore, even when recycled fuel for PWR is stored, it is possible to secure sufficient heat transfer performance and a sufficient subcritical function. Because the number of projections provided in the square pipes is small, it is possible to secure extrusion accuracy even when a material hard to be extruded such as a boron-aluminum material is used. Therefore, it is possible to prevent a fall in manufacturing efficiency. In particular, in a basket in which tabular members provided with cutouts are combined in a case box shape, cutting-out after obtaining tabular members with extrusion molding or the like is necessary. However, in this embodiment and the modifications of the embodiment, machining cost can be substantially reduced because such cutting-out is unnecessary. Recycled fuel assembly storage baskets having a configuration same as the configuration disclosed in this embodiment and the modifications of the embodiment have actions and effects same as those of this embodiment. The configuration disclosed in this embodiment and the modifications can be applied in embodiments described below as well as appropriate.

### (Second Embodiment)

A second embodiment is the same as the first embodiment and the like in that square pipes and hollow tabular members are combined. However, the second embodiment is different from the first embodiment and the like in that a plurality of storage cell rows are alternately arrayed in contact with outer sides of sidewalls of square pipes and outer sides of sidewalls of first tabular members and second tabular members are stacked in a plurality of stages among the storage cell rows with long side ends thereof set in contact with each other. Otherwise, the second embodiment is the same as the first embodiment and the like.

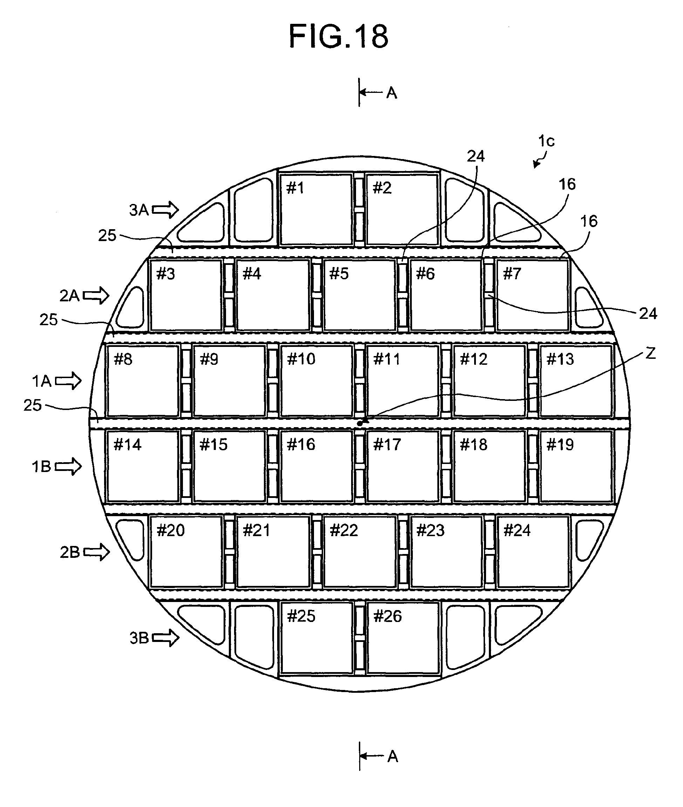

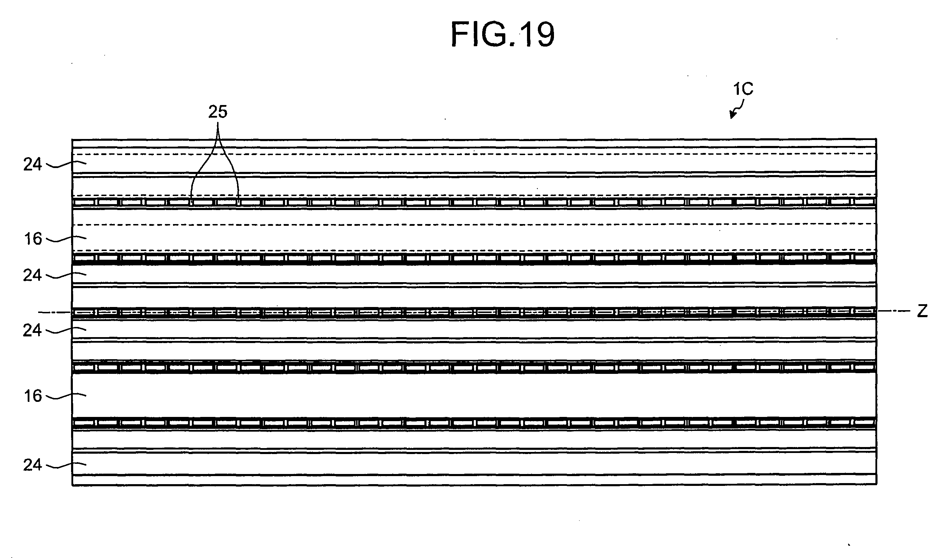

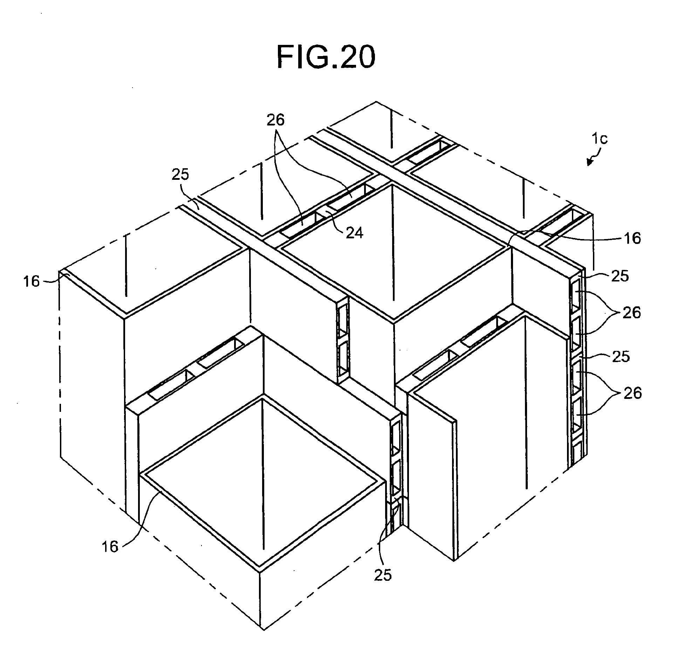

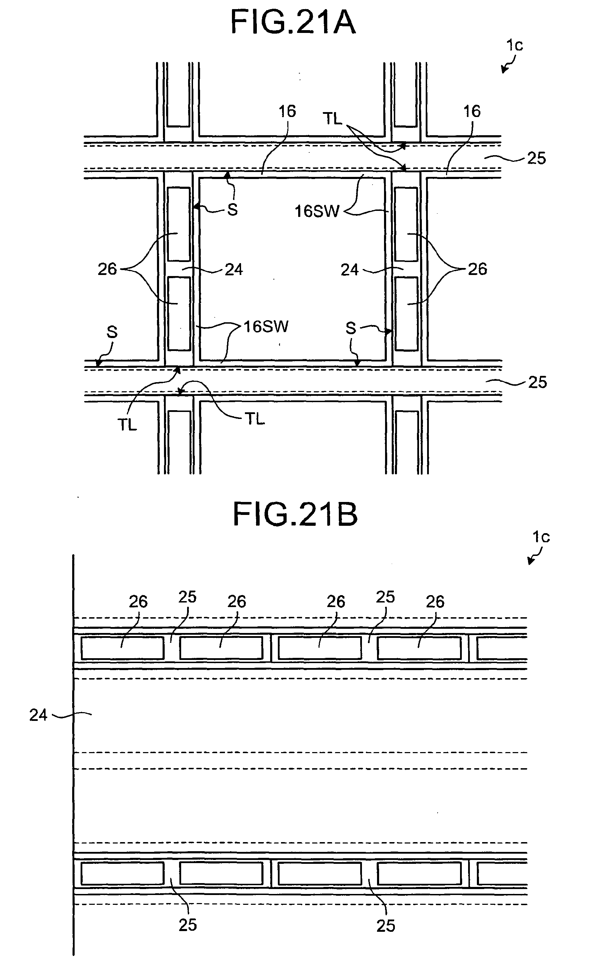

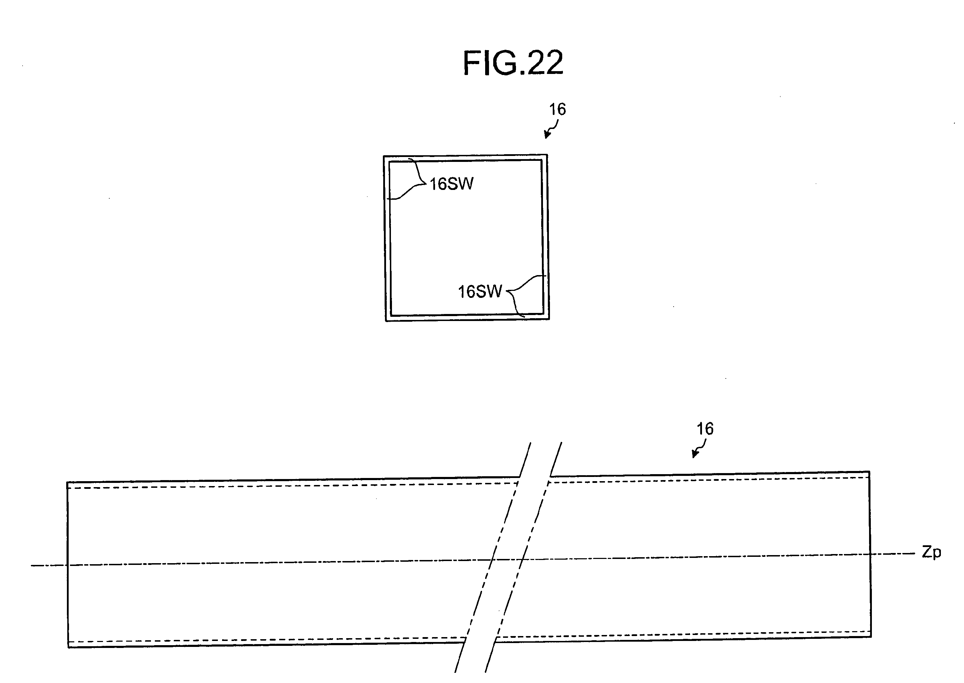

Fig. 18 is a plan view of a basket according to the second embodiment. Fig. 19 is a sectional view taken along A-A shown in Fig. 18. Fig. 20 is a perspective view of the basket according to the second embodiment. Fig. 21A is a partially enlarged view of the basket according to the second embodiment. Fig. 21B is a partially enlarged sectional view of the basket according to the second embodiment. Fig. 22 is a diagram for explaining a square pipe forming the basket according to the second embodiment.

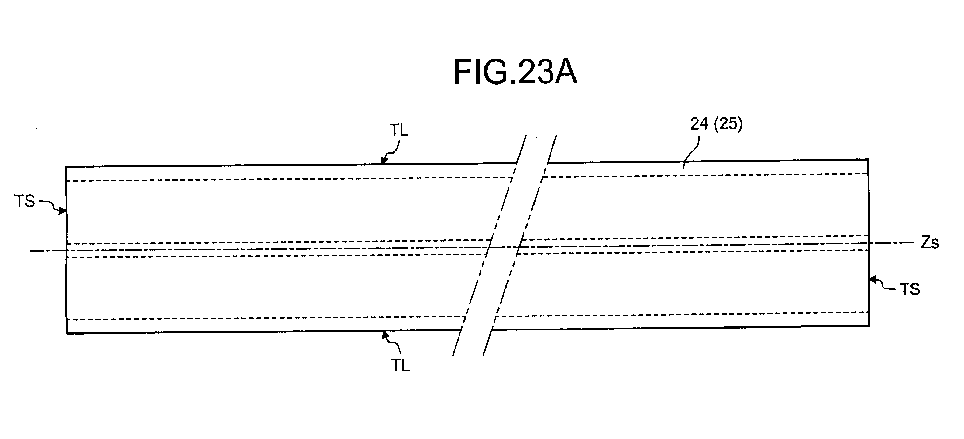

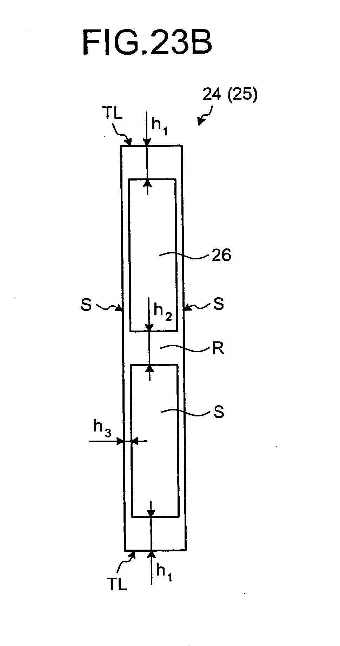

Figs. 23A and 23B are diagrams for explaining a tabular member forming the basket according to the second embodiment.

As shown in Figs. 18, 19, 20, 21A, and 21B, in this basket 1c, storage cell rows 1A, 2A, 3A, 1B, 2B, and 3B are alternately arrayed in contact with outer sides of sidewalls of square pipes 16 and outer sides of sidewalls of first tabular members 24 and second tabular members 25 are stacked in a plurality of stages among the storage cell rows with long side ends thereof set in contact with each other. Recycled fuel assemblies are stored in the square pipes 16. With such a configuration, it is possible to secure a wide heat transfer area between the square pipes 16 and the first and second tabular members 24 and 25. Surfaces on which the square pipes 16 are in contact with the first and second tabular members 24 and 25 are planes without projections. Therefore, it is possible to easily mold the square pipes 16 even when a boron-aluminum alloy, which is a material hard to be extruded, is used.

The square pipes 16 are one kind of square pipes of a simple shape without projections. Therefore, only one kind of dice used for extrusion molding of the square pipes 16 has to be provided. Because the square pipes 16 are formed in the simple shape, yield can be improved and time and labor for manufacturing and managing the square pipes 16 can be reduced. If sectional shapes of the first and second tabular members 24 and 25 (sectional shapes orthogonal to a direction piercing through the hollow sections 26) are formed in the same shape, the first and second tabular members 24 and 25 can be used in common. This makes it possible to reduce labor and time for manufacturing and managing the first and second tabular members 24 and 25. The square pipes 16 and the first and second tabular members 24 and 25 forming the basket 1c are explained and the basket 1c is explained more in detail below.

As shown in Figs. 20, 21A, and 21B, in the square pipe 16 forming the basket 1c according to the second embodiment, a sectional inner shape and a sectional outer shape perpendicular to an axis Zp of the square pipe 16 are formed in a square shape and recycled fuel assemblies are stored in the square pipe 16. In the square pipe 16, unlike the square pipe 10 and the like according to the first embodiment, projections are not provided on outer sides of sidewalls 16SW. Consequently, even when a material hard to be extruded such as boron-aluminum is used, it is possible to easily extrusion-mold the square pipe 16 compared with the square pipe 10 according to the first embodiment.

As shown in Figs. 20, 21A, 23A, and 23B, a first tabular member 24 includes two hollow sections 26. A sectional shape perpendicular to an axis Zs direction of the first tabular member 24 is a substantial B shape. The axis Zs direction of the first tabular member 24 is parallel to the piercing-through direction of the hollow sections 26. When the first tabular member 24 is arranged between the square pipes 16, the hollow sections 26 of the first tabular member 24 function as flux traps that absorb neutrons radiated from recycled fuel assemblies in water, for example, during loading in pool water and during fuel extraction in the pool water, and secure subcriticality.

As shown in Fig. 23A, one rib R is provided in the tabular member 24 (25) and a section of the tabular member 24 (25) is formed in a B shape by the rib R. The number of ribs R is not limited to one. The thickness h₂ of the rib R and the thickness h₁ at long side ends TL of the tabular member 24 are determined by taking into account heat transfer performance and the magnitude of the stress acting from the rib R and sides S of the first tabular member 24 when the cask 200 (see Figs. 1 and 2) falls. When a dimension on a long side of the tabular member 24 (25) is set large, the number of ribs R may be small when the sectional shape perpendicular to the axis Zs direction is the substantial B shape. In this case, the tabular member 24 (25) is formed in a shape that can safely support the square pipes by arranging the ribs R at appropriate intervals with the sectional shape formed in, for example, a substantial double-B shape When the dimension on the long side of the tabular member 24 (25) is set small, the number of ribs R may be excessively large when the sectional shape perpendicular to the axis Zs direction is the substantial B shape. In this case, the tabular member 24 (25) is formed in a shape that can rationally and safely support the first square pipes by omitting the ribs R with the sectional shape formed in, for example, a square shape.

When the square pipes 16 and the first tabular members 24 are arrayed to form storage cell rows, outer sides of sidewalls of the square pipes 16 and sides S of the first tabular members 24 are set in contact with each other, the square pipes 16 and the first tabular members 24 are alternately arrayed, and the square pipes 16 and the first tabular members 24 are linearly arrayed (storage cell rows 1A and 1B). The first tabular member 24 is arranged between the square pipes 16 adjacent to each other. Therefore, as described above, the hollow sections 26 included in the first tabular member 24 function as flux traps.

The first and second tabular members 24 and 25 are arrayed in this way to form storage cell rows 1A, 2A, 3A, 1B, 2B, and 3B. As it is seen from Fig. 18, the storage cell row 3A and the storage cell row 2A as well as the storage cell rows 3B and the storage cell rows 2B are arranged to be shifted from each other by predetermined length (a half of the length of one side of the first square pipes 16) with respect to an arraying direction of the square pipes 16. This makes it possible to arrange a larger number of square pipes 16 in a limited section (a section orthogonal to an axis Z of the basket 1c). Therefore, it is possible to increase the number of stored recycled fuel assemblies while suppressing an increase in dimensions of the cask 200 (see Figs. 1 and 2). In particular, the effect of an increase in the number of stored recycled fuel assemblies is large in recycled fuel assemblies for PWR having large dimensions.

As shown in Figs. 18, 20, and 21B, the second tabular members 25 are stacked between the storage cell rows 1A and 2A, between 1B and 2B, between 2A and 3A, and between 2B and 3B with long side ends TL set in contact with each other. As shown in Fig. 23B, the second tabular member 25 includes two hollow sections 26. A sectional shape perpendicular to an axis Zs direction of the second tabular member 25 is a substantial B shape. The axis Zs direction of the second tabular member 25 is parallel to a piercing-through direction of the hollow sections 26. When the second tabular member 25 is arranged between the storage cell rows, the hollow sections 26 of the second tabular member 25 function as flux traps that absorb neutrons radiated from the recycled fuel assemblies during loading in pool water or fuel extraction in the pool water and secure subcriticality.

As shown in Fig. 23B, one rib R is provided in the second tabular member 25 and a section of the second tabular member 25) is formed in a B shape by the rib R. The number of ribs R is not limited to one. The thickness of the rib R and the thickness at long side ends TL of the second tabular member 25 are determined by taking into account heat transfer performance and the magnitude of the stress acting on the rib R and the long side ends TL when the cask 200 falls. When a dimension on a long side of the tabular member 25 is set large, the number of ribs R may be small when the size on the long sides of the tabular member 25 is increased. In this case, the tabular member 25 is formed in a shape that can safely support the square pipes by arranging the ribs R at appropriate intervals with the sectional shape formed in, for example, a substantial double-B shape When the size on the long sides of the tabular member 25 is set small, the number of ribs R may be excessively large when the sectional shape perpendicular to the axis Zs direction is the substantial B shape. In this case, the tabular member 25 is formed in a shape that can rationally and safely support the square pipes with the ribs R omitted by forming the sectional shape, for example, a square shape.

The sides S of the second tabular members 25 stacked in a plurality of stages and arranged between the storage cell rows 1A and 2A and the like are in contact with the ouster sides of the sidewalls of the square pipes 16 and the long side ends TL of the first tabular members 26. In this way, in the basket 1c according to this embodiment, because a contact area between the square pipes 16 and the first and second tabular members 24 and 25 is large, heat transfer performance is improved. In the basket 1c according to this embodiment, because the shock at the time when the cask 200 falls can be received with a wider area, shock resistance performance is also improved. These points are advantageous when recycled fuel assemblies for PWR having a large heating value and large mass are stored.

As explained above, in this embodiment, a plurality of storage cell rows are alternately arrayed in contact with outer sides of sidewalls of square pipes and outer sides of sidewalls of first tabular members. Second tabular members are stacked in a plurality of stages among the storage cell rows with long side ends thereof set in contact with each other. This makes it possible to increase a heat transfer area between the square pipes and the tabular members and form flux traps among the square pipes that store the recycled fuel assemblies. Therefore, it is possible to secure sufficient heat transfer performance and a sufficient subcritical function even when recycled fuel for PWR is stored. Because the square pipes do not have projections, even when a material hard to be extruded such as a boron-aluminum material is used, it is possible to easily secure extrusion accuracy, improve yield, and reduce time and labor for manufacturing and managing the square pipes 16. If the first and second tabular members 24 and 25 are formed in the same sectional shape, the first and second tabular members 24 and 25 can be used in common. This makes it possible to also reduce time and labor for manufacturing and managing the first and second tabular members 24 and 25. Recycled fuel assembly storage baskets having a configuration same as the configuration disclosed in this embodiment and the modifications of the embodiment have actions and effects same as those of this embodiment. The configuration disclosed in this embodiment and the modifications can be applied as appropriate in embodiments described below as well.

### (Third Embodiment)

A third embodiment is the same as the first embodiment and the like in that square pipes and hollow tabular members are combined. However, the third embodiment is different from the first embodiment and the like in that the tabular members are stacked to have a gradient with respect to the bottom of a cask as a recycled fuel assembly storage container that houses a basket therein. Otherwise, the third embodiment is the same as the first embodiment and the like.

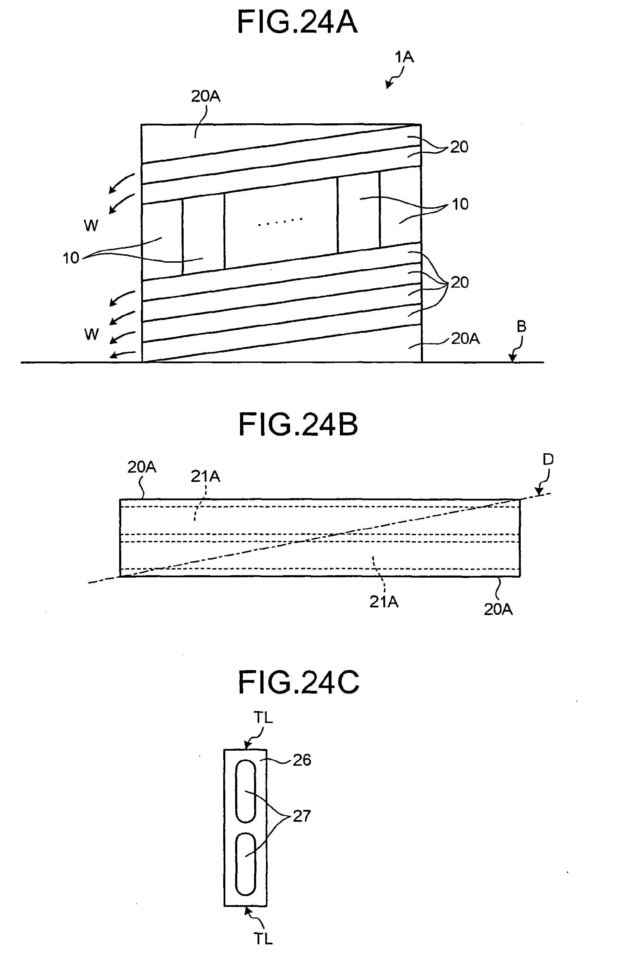

Fig. 24A is a diagram of a basket according to the third embodiment. Fig. 24B is a diagram for explaining an example of a spacer used in the basket according to the third embodiment. The tabular member 20 (see Fig. 8) included in a basket 1a is configured by stacking the hollow tabular members 20 in a plurality of stages to have a gradient with respect to a bottom B of a cask. A spacer 20A arranged on the bottom B has a right-angled triangle shape as shown in Fig. 24A. The tabular members 20 are stacked with long side ends thereof set in contact with the hypotenuse of the spacer 20A. It is also possible to form an end of the basket 1a on the opposite side of the bottom B flat by arranging the spacer 20A on the opposite side of the bottom B as well. In this embodiment, for example, the spacer 20A can be formed by cutting the tabular member 20 of a rectangular shape shown in Fig. 8 along a diagonal (an alternate long and short dash line in Fig. 24B) D.

In the basket la, the air and water W can be prevented from being accumulated in hollow sections 21A of the tabular members 20 by the configuration described above. As the gradient of the tabular members 20 is steeper, a surer effect can be expected. However, because of easiness of manufacturing of the spacer 20A that determines the gradient, it is reasonable to set the gradient to be equal to or larger than 0 degree and equal to or smaller than the height of one stage of the tabular members 20. The square pipes 10 and the tabular members 20 can be integrally formed by bolts, welding, or the like to make it easy to handle the basket 1a. The square pipes 10 and the tabular members 20 can be integrally bound by binding means such as a wire or a band to make it easy to handle the basket 1a. This is preferable because the basket 1a can be disassembled as required. The tabular members 20 integrated by bolts or welding can be formed integrally with the square pipes 10 by binding means such as a wire or a band. This is preferable because the basket 1a can be treated as one body.

In the basket 1 shown in Fig. 5, to eliminate the water and air accumulated in the hollow sections 21 of the tabular members 20, holes piercing through to the hollow sections 21 are formed at predetermined intervals at the long side ends TL of the tabular members 20. In general, a drill is used for perforation. The tabular members 20 are made of, for example, an aluminum alloy containing boron or a boron compound. In the perforation by the drill, the center of a cutting edge of the drill is stationary relatively to the tabular members 20 to be machined. When the cutting edge of the drill hits hard particles and the like of boron contained in the tabular members 20, the tip of the cutting edge considerably wears out. Therefore, it is difficult to feed the drill. As a result, because polishing of the blade of the drill is frequency required, work efficiency is deteriorated and manufacturing cost for the basket is increased. As in the basket 1a according to this embodiment, by stacking the hollow tabular members 20 in a plurality of stages to have a gradient with respect to the bottom B of the cask, the water and air present in the hollow sections of the tabular members 20 can be easily eliminated along the gradient. Therefore, it is unnecessary to provide holes at the long side ends of the tabular members 20. As a result, it is possible to easily manufacture the basket 1a and reduce manufacturing cost.

Fig. 24C is a diagram for explaining a modification of the tabular member forming the basket according to the third embodiment. A sectional shape of hollow sections (holes) 27 included in the tabular member 26 in a piercing-through direction of the hollow sections 27 is preferably formed in a race-track shape as shown in Fig. 24C. In other words, the sectional shape of the hollow sections 27 is formed as curved surfaces on the long side ends TL side and sides opposed thereto. This makes it possible to eliminate planes of ceilings and bottoms of the hollow sections 27 of the tabular member 26. Therefore, it is possible to more effectively prevent the air and water from being accumulated in the hollow tabular member 26.

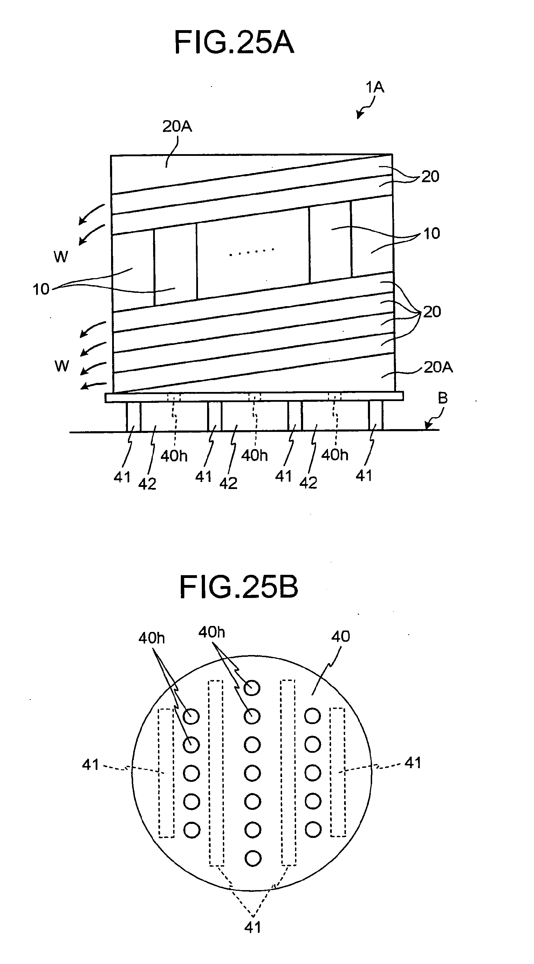

Figs. 25A and 25B are diagrams of a basket according to a modification of the third embodiment. This modification is substantially the same as the third embodiment. However, the modification is different from the third embodiment in that a bottom plate 40 is arranged between the basket 1a and the bottom B of the cask. Otherwise, the modification is the same as the third embodiment. Between the basket 1a and the bottom B of the cask, the bottom plate 40 that separates the basket 1a and the bottom B is provided. As shown in Figs. 25A and 25B, holes 40h are provided in the bottom plate 40. Projections 41 are provided on a side of the bottom plate 40 opposed to the bottom B of the cask to form spaces 42 between the bottom plate 40 and the bottom B of the cask. The bottom plate 40 can be formed in a drain-board shape. The bottom plate 40 can be made of, for example, stainless steel. If the bottom plate 40 is made of a material having low heat conductivity such as stainless steel, heat shielding performance between the basket 1a and the cask can be secured by heat transfer resistance and contact heat resistance. The stacked tabular members 20 and the bottom plate 40 can be integrated by using bolts and nuts.

When recycled fuel assemblies for PWR are stored, the size of the holes 40h provided in the bottom plate 40 is set such that ends of the recycled fuel assemblies are placed on the bottom plate 40. When recycled fuel assemblies for BWR are stored, the size of the holes 40h is set such that ends of the recycled fuel assemblies pierces through the holes 40h provided in the bottom plate 40. Because ends of the recycled fuel assemblies for PWR are flat, drainage is secured by placing the ends on the bottom plate 40. On the other hand, because ends of the recycled fuel assemblies for BWR are sharp, drainage can be secured even if the ends come into contact with the bottom B of the cask. Therefore, an increase in the total length of the cask can be suppressed by setting the ends to pierce through the holes 40h.

The basket 1a placed on the bottom plate 40 can be handled as one body by providing the bottom plate 40. A quantity of heat transmitted from the basket 1a to the bottom B of the cask can be reduced. Therefore, it is possible to suppress thermal deterioration of a material having a neutron absorbing function (a neutron shielding material) arranged on the bottom B side of the cask and cause the material to display neutron shielding performance throughout a storage period of several tens years. The water W drained from the basket 1a is discharged to the outside through an inner space of the tabular members 20 arranged to be inclined with respect to the bottom B of the cask. The water falling from the basket 1a to the bottom plate 40 is discharged to the spaces 42 formed between the bottom plate 40 and the bottom B of the cask. Because drainage is improved by the spaces 42, it is possible to reduce remaining moisture before vacuum drying and reduce time required for the vacuum drying. Because air permeability is improved by the space 42, efficiency of the vacuum drying is also improved. The basket 1a integrated by the method described above can be fixed to the bottom plate 40 by bolts or welding. This makes it possible to handle the basket 1a as one body together with the bottom plate 40 and facilitates work for arranging the basket 1a in the cask.

When the projections 41 provided in the bottom plate 40 is tabular, as in the tabular member 20a shown in Fig. 9A, drainage is improved and an area for heat transfer to the bottom B can be reduced when cutouts are provided in portions that are in contact with the bottom B. The projections 41 are not limited to the tabular shape shown in Fig. 25B. Columnar members can be arranged at predetermined intervals.

### INDUSTRIAL APPLICABILITY

As described above, the recycled fuel assembly storage basket and the recycled fuel assembly storage container according to the present invention are useful for transportation and storage of recycled fuel assemblies and, in particular, suitable for transportation and storage of recycled fuel assemblies for PWR. The basket can be used in a concrete cask for storage purpose, a canister, or a rack of a recycled fuel assembly storage pool.

## Claims

1. A recycled fuel assembly storage basket comprising:
square pipes, on at least one surfaces on outer sides of opposed sidewalls of which a plurality of projections are provided, the square pipes storing recycled fuel assemblies; and
tabular members, wherein
a plurality of storage cell rows formed by arraying the projections of the square pipes in contact with each other are provided, and the tabular members are stacked in a plurality of stages among the storage cell rows with long side ends thereof set in contact with each other.

2. A recycled fuel assembly storage basket comprising:
first square pipes, on outer sides of opposed sidewalls of which a plurality of projections are provided, respectively, the first square pipes storing recycled fuel assemblies;
second square pipes, on outer sides of one side walls of which a plurality of projections are provided, the second square pipes storing recycled fuel assemblies; and
tabular members, wherein
a plurality of storage cell rows formed by arraying the projections of the first square pipes in contact with each other and arranging the second square pipes on the outer sides are provided, the projections of the first square pipes and the projections of the second square pipes being in contact with each other, and the tabular members are stacked in a plurality of stages among the storage cell rows with long side ends thereof set in contact with each other.

3. The recycled fuel assembly storage basket according to claim 1 or 2, wherein the tabular members are stacked in a longitudinal direction of the square pipes.

4. The recycled fuel assembly storage basket according to any one of claims 1 to 3, wherein a reinforcing member that supports a part of a load on the recycled fuel assembly storage basket and reinforces the recycled fuel assembly storage basket is arranged between the tabular members adjacent to each other.

5. The recycled fuel assembly storage basket according to any one of claims 1 to 4, wherein the tabular members are hollow members having at least one hole.

6. The recycled fuel assembly storage basket according to claim 5, wherein a solid or hollow intra-tabular member reinforcing member that supports a part of the load on the recycled fuel assembly storage basket and reinforces the recycled fuel assembly storage basket is arranged in the hole.

7. The recycled fuel assembly storage basket according to claim 6, wherein, when there are two or more holes, the intra-tabular member reinforcing member is arranged in at least one of the holes.

8. The recycled fuel assembly storage basket according to any one of claims 1 to 7, wherein tapered sections are provided in portions of the projections that are in contact with the projections of the square pipe adjacent thereto.

9. The recycled fuel assembly storage basket according to any one of claims 1 to 8, size of a space surrounded by the projections is different depending of places where the square pipes are arranged.

10. The recycled fuel assembly storage basket according to any one of claims 1 to 9, wherein thickness of the tabular members is changed depending on places where the tabular members are arranged.

11. The recycled fuel assembly storage basket according to any one of claims 1 to 10, wherein size of a space surrounded by the projections of the square pipes and thickness of the tabular members are changed.

12. The recycled fuel assembly storage basket according to claim 11, wherein the size of the space surrounded by the projections of the square pipes and the thickness of the tabular members are increased from an outer side to a center of the recycled fuel assembly storage basket.

13. A recycled fuel assembly storage basket, comprising:
square pipes that store recycled fuel assemblies;
hollow first tabular members rectangular in a sectional external shape; and
hollow second tabular members rectangular in a sectional external shape, wherein
a plurality of storage cell rows alternately arrayed in contact with outer sides of sidewalls of square pipes and outer sides of sidewalls of first tabular members, and the second tabular members are stacked in a plurality of stages among the storage cell rows with long side ends thereof set in contact with each other.

14. The recycled fuel assembly storage basket according to claim 13, wherein thickness or dimensions of the second tabular members are different from thickness or dimensions of the first tabular members, and the second tabular members are similar to the first tabular members.

15. The recycled fuel assembly storage basket according to any one of claims 1 to 14, wherein, in at least a pair of the storage cell rows, corners of the square pipes in one of the storage cell rows are arranged in positions of sidewalls the square pipes in the other storage cell row.

16. The recycled fuel assembly storage basket according to any one of claims 1 to 15, wherein, in at least a pair of the storage cell rows, corners of the square pipes in one of the storage cell rows are arranged in positions of corners the square pipes in the other storage cell row.

17. The recycled fuel assembly storage basket according to any one of claims 1 to 16, wherein cutouts are provided at least at the long side ends of the tabular member opposed to a bottom of a recycled fuel assembly storage container that houses the recycled fuel assembly storage basket therein or at ends of the square pipe opposed to the bottom of the recycled fuel assembly storage container.

18. The recycled fuel assembly storage basket according to any one of claims 5 to 16, wherein the tabular members arranged among the storage cell rows are stacked to have a gradient with respect to a bottom of a recycled fuel assembly storage container that houses the recycled fuel assembly storage basket therein.

19. The recycled fuel assembly storage basket according to claim 18, wherein a sectional shape of holes included in the tabular members is a race-track shape.

20. The recycled fuel assembly storage basket according to claim 18 or 19, wherein an area of a portion of the long side end of the tabular member that is in contact with the long side end of the tabular member adjacent thereto is smaller than an area of a section of the tabular member when the tabular member is cut by a plane parallel to a surface forming the long side end of the tabular member.

21. The recycled fuel assembly storage basket according to claim 20, projections are formed in a portion of the long side end of the tabular member that is in contact with the long side end of the tabular member adjacent thereto.

22. The recycled fuel assembly storage basket according to claim 20 or 21, spaces are formed in a portion of the long side end of the tabular member that is in contact with the long side end of the tabular member adjacent thereto.

23. The recycled fuel assembly storage basket according to any one of claims 18 to 22, wherein a bottom plate that separates the recycled fuel assembly storage basket and the recycled fuel assembly storage container is provided between the recycled fuel assembly storage basket and the bottom of the recycled fuel assembly storage container.

24. The recycled fuel assembly storage basket according to claim 23, wherein an opening is provided in the bottom plate.

25. The recycled fuel assembly storage basket according to claim 24, wherein a space is provided between the bottom plate and the bottom of the recycled fuel assembly storage container.

26. The recycled fuel assembly storage basket according to any one of claims 1 to 25, wherein at least the square pipes are made of an aluminum alloy containing boron or a boron compound.

27. The recycled fuel assembly storage basket according to any one of claims 1 to 25, wherein at least the tabular members are made of an aluminum alloy containing boron or a boron compound.

28. The recycled fuel assembly storage basket according to any one of claims 1 to 25, wherein at least the square pipes are made of a stainless steel containing boron or a boron compound.

29. The recycled fuel assembly storage basket according to any one of claims 1 to 25, wherein at least the tabular members are made of a stainless steel containing boron or a boron compound.

30. The recycled fuel assembly storage basket according to any one of claims 1 to 25, wherein at least the square pipes are made of a stainless steel containing gadolinium or a gadolinium compound.

31. The recycled fuel assembly storage basket according to any one of claims 1 to 25, wherein at least the tabular members are made of a stainless steel containing gadolinium or a gadolinium compound.

32. The recycled fuel assembly storage basket according to any one of claims 4 to 31, wherein the reinforcing member is stainless steel.

33. The recycled fuel assembly storage basket according to any one of claims 6 to 31, wherein the intra-tabular member reinforcing member is a material having strength higher than that of the tabular members.

34. The recycled fuel assembly storage basket according to claim 33, wherein the reinforcing member is a material having strength higher than that of the tabular members.

35. A recycled fuel assembly storage container, comprising:
a barrel including an opening and a cavity;
a lid that is attached to the opening and seals the cavity; and
the recycled fuel assembly storage basket according to any one of claims 1 to 34 arranged in the cavity.

36. The recycled fuel assembly storage container according to claim 35, wherein an outer circumferential surface of the recycled fuel assembly storage basket is in contact with an inner wall of the cavity.
